# EUROPÄISCHE PATENTSCHRIFT

(11) **EP 3 211 287 B1**
(45) Veröffentlichungstag und Bekanntmachung des Hinweises auf die Patenterteilung: **03.05.2023**
(21) Anmeldenummer: 17157515.2
(22) Anmeldetag: 23.02.2017
(51) Int. Cl.: F16P 3/14, F16P 1/02

(54) **SICHERHEITSVORRICHTUNG FÜR EINEN PALETTIERER SOWIE SYSTEM MIT EINEM PALETTIERER UND EINER SICHERHEITSVORRICHTUNG SOWIE VERFAHREN**
SAFETY DEVICE FOR A PALLETIZER AND SYSTEM WITH A PALLETISER AND A SAFETY DEVICE AND METHOD
DISPOSITIF DE SÉCURITÉ POUR UN PALETTISEUR ET SYSTÈME COMPRENANT UN PALETTISEUR ET UN DISPOSITIF DE PROTECTION ET PROCÉDÉ

(30) Priorität: 23.02.2016 DE 102016103185
(43) Veröffentlichungstag der Anmeldung: 30.08.2017
(73) Patentinhaber: Windmöller & Hölscher KG, 49525 Lengerich (DE)
(72) Erfinder: Tillmann, Guido, 48607 Ochtrup (DE); Trame, Jan, 49134 Wallenhorst (DE)

(56) Entgegenhaltungen:
- EP-A2- 1 344 973
- DE-A1-102004 038 906
- DE-A1-102007 036 677
- DE-A1-102008 050 882
- DE-A1-102013 111 570
- US-A1- 2014 222 203

## Beschreibung

Die vorliegende Erfindung betrifft eine Sicherheitsvorrichtung für einen Palettierer, ein System mit einem Palettierer und einer Sicherheitsvorrichtung sowie ein Verfahren zur Absicherung einer Fördereinheit eines Palettierers.

Palettierer dienen im Allgemeinen dazu, ein Fördergut auf einer Palette zu stapeln und somit beispielsweise transport- oder verkaufsfähig zu machen. Dabei wird das Fördergut in Säcken oder einzelnen Produkteinheiten auf einer Palette geschichtet. Ist die gewünschte Höhe der Palette mit den verschiedenen Schichten des Fördergutes erreicht, kann die Palette beispielsweise zum Ausgang des Palettierers oder zu einer weiteren Verarbeitungsstation, wie beispielsweise einer weiteren Verpackungsstation, abtransportiert werden. Da es sich bei dem palettierten Fördergut häufig um sehr schwere Einheiten handelt und innerhalb des Palettierers verschiedene, potentiell verletzungsgefährliche, Mechanismen wirken, ist es wünschenswert, Sicherheitsmaßnahmen vorzusehen, welche insbesondere bei laufenden Maschinen die Verletzungsgefahr eines Benutzers reduzieren.

Dementsprechend sind Sicherheitsvorrichtungen für einen Palettierer grundsätzlich bekannt, siehe zum Beispiel DE102004038906, DE102013111570A1 und EP1344973A2.

So werden häufig beispielsweise Rolltore am Palettierer vorgesehen, welche beim Palettierungsvorgang geschlossen sind und sich nur für die Durchfahrt einer Palette öffnen. Dabei finden jedoch unterschiedliche Produkte zur Palettierung und damit unterschiedliche Anforderungen an die Ausfahrt bzw. den Abtransport der Paletteneinheiten keine Berücksichtigung. So kann beispielsweise zwischen der Palette und dem Aufbau der jeweiligen Fördereinheit ein Spalt entstehen, sodass ein Benutzer, an der ausfahrenden Palette vorbei in die laufende Maschine greifen oder gelangen kann. Weiterhin sind beispielsweise Erkennungssensoren bekannt, um den Ausfahrtbereich zu überwachen und bei einem unbefugten Zugang eines Benutzers die Maschine abzustellen. Dabei können diese Erkennungssensoren jedoch häufig nicht zwischen der Palette und einem Benutzer unterscheiden, sodass diese bei Ausfahrt der Palette abgeschaltet werden müssen, oder aber die Erkennungssensoren können die Unterscheidung zwischen der Palette und einem Benutzer leisten, sind dann jedoch teuer in der Herstellung und Montage und bieten gleichzeitig häufig keine Sicherheit gegenüber Toträumen bzw. toten Winkeln, welche beispielsweise durch unterschiedliche Stapelhöhen entstehen können.

Es ist Aufgabe der Erfindung, voranstehende aus dem Stand der Technik bekannte Nachteile zumindest teilweise zu beheben. Insbesondere ist es Aufgabe der vorliegenden Erfindung, die Sicherheit bei dem Abtransport von Paletteneinheiten und/oder bei der Ausgabe eines Fördergutes in kostengünstiger und einfacher Weise bei geringem Bauraumbedarf zu erhöhen.

Die voranstehende Aufgabe wird gelöst durch eine Sicherheitsvorrichtung mit den Merkmalen des Anspruchs 1 und ein Verfahren mit den Merkmalen des Anspruchs 27.

Weitere Merkmale und Details der Erfindung ergeben sich aus den Unteransprüchen, der Beschreibung und den Zeichnungen. Dabei gelten Merkmale und Details, die in Zusammenhang mit der erfindungsgemäßen Sicherheitsvorrichtung beschrieben worden sind, selbstverständlich auch in Zusammenhang mit dem erfindungsgemäßen System und/oder dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Erfindungsgemäß weist die Sicherheitsvorrichtung für einen Palettierer zumindest ein Sicherheitselement auf, welches an einer Fördereinheit des Palettierers, die zum Abtransport von Paletteneinheiten dient, anordenbar ist. Dabei ist die Sicherheit gegenüber einem unbefugten Zugang des Nutzers zur Fördereinheit durch das Sicherheitselement erhöhbar, wobei das Sicherheitselement zur Anpassung an eine Größe der Paletteneinheit zumindest in einen ersten Sicherheitszustand und in einen zweiten Sicherheitszustand bringbar ist. Unter der Größe der Paletteneinheit kann vorzugsweise die Höhe oder besonders bevorzugt eine Breite der Paletteneinheit verstanden werden. Die Breite der Paletteneinheit kann sich insbesondere senkrecht zur Bewegungsrichtung der Paletteneinheit innerhalb der Förderebene der Paletteneinheit erstrecken. Somit kann unter der Breite der Paletteneinheit das, insbesondere maximale, Maß verstanden werden, welches die Paletteneinheit oder die Palette beim Abtransport durch eine Öffnung parallel zum Untergrund und quer bzw. senkrecht zur Bewegungsrichtung einnimmt. Bei dem Sicherheitszustand kann es sich zum Beispiel um eine Sperrbreite handeln, wobei das Sicherheitselement einen bestimmten Bereich beim Abtransport der Paletteneinheit verdeckt. Zusätzlich oder alternativ kann es sich bei einer Anpassung des Sicherheitszustandes um ein Aktivieren oder Deaktivieren von Teilbereichen des Sicherheitselementes handeln. Unter dem unbefugten Zugang eines Benutzers zur Fördereinheit kann vorzugsweise auch ein teilweiser Zugang, zum Beispiel durch Hineinstecken einer Hand oder eines Beins, verstanden werden. Unter einem unbefugten Zugang kann jedoch insbesondere auch der Zutritt durch den gesamten Körper des Benutzers verstanden werden.

Vorzugsweise kann die Fördereinheit des Palettierers einen Maschinenauslauf darstellen und somit Teil des Palettierers sein oder an diesem angeordnet sein. Die Fördereinheit kann beispielsweise ein Band oder ein Kran oder dergleichen im Sinne der vorliegenden Erfindung zur Beförderung der Paletteneinheit aufweisen. Weiterhin kann unter einer Paletteneinheit beispielsweise eine fertige Palette mit der Palette und einem entsprechend aufgestapelten Fördergut oder eine einzelne leere Palette verstanden werden.

Somit bietet eine erfindungsgemäße Sicherheitsvorrichtung den Vorteil, dass eine Mindestsicherheit gegen den Zugang eines Benutzers zur Fördereinheit bzw. zum Palettierer durch das Sicherheitselement auch bei wechselnden Produkten, insbesondere bei wechselnden Größen von Produktpaletten, insbesondere während des Abtransportes der Paletteneinheit, gewährleistet ist. Durch das Vorsehen eines ersten und eines zweiten Sicherheitszustandes kann somit das Sicherheitselement in einfacher Weise an unterschiedliche Größen der Paletteneinheiten und damit verschiedene Anforderungen innerhalb eines Palettierprozesses bzw. innerhalb verschiedener Palettierprozesse anpassbar sein, den Sicherheitszustand verändern und damit eine ähnliche, insbesondere eine gleiche, Sicherheit aufweisen.

Es ist ferner vorzugsweise denkbar, dass bei einer erfindungsgemäßen Sicherheitsvorrichtung das Sicherheitselement in einen dritten Sicherheitszustand bringbar ist. Vorzugsweise kann es sich bei dem dritten Sicherheitszustand um einen Zustand handeln, in dem eine Öffnung für den Abtransport der Palettiereinheit komplett freigegeben ist. Dies ist insbesondere von Vorteil, da häufig drei festgelegte oder jeweils für den Palettierer vorgesehene Größen von Paletteneinheiten interessant sind. Demnach kann es sich beispielsweise bei dem ersten Sicherheitszustand um einen Sicherheitszustand handeln, in dem das Sicherheitselement maximal wirkt und somit beispielsweise maximal ausgefahren ist oder maximal aktiviert ist und somit den größten Bereich im ersten Sicherheitszustand überdeckt. Bei dem zweiten Sicherheitszustand kann es sich um einen Zwischenzustand handeln und bei dem dritten Sicherheitszustand wie beschrieben kann es sich vorzugsweise um einen komplett geöffneten Zustand handeln. Dadurch kann insbesondere der Bauraum durch das maximale Ausnutzen zwischen dem ersten und dem dritten Sicherheitszustand besonders gut genutzt sein und das Sicherheitselement damit so klein wie möglich realisiert sein. Dabei kann die Zuordnung der Sicherheitszustände auch vertauscht sein, insbesondere wenn mehr als drei Sicherheitszustände vorgesehen sind. Vorzugsweise kann auch der zweite Sicherheitszustand den maximal geöffneten Zustand und der erste Sicherheitszustand den maximal ausgefahrenen oder aktivierten Zustand umfassen, wenn beispielsweise nur zwei Sicherheitszustände vorgesehen sind.

Im Rahmen der Erfindung kann weiterhin vorgesehen sein, dass das Sicherheitselement mechanisch und/oder optisch wirkt. Unter einer mechanischen Wirkung kann dabei beispielsweise eine physische Sperrwirkung verstanden werden. Für eine derartige physische Sperrwirkung kann das Sicherheitselement beispielsweise eine Platte oder eine Tür aufweisen. Dies hat den Vorteil, dass das Sicherheitselement besonders robust und besonders einfach zu fertigen ist. Eine optische Wirkung des Sicherheitselementes kann beispielsweise dadurch erreicht werden, dass das Sicherheitselement einen Lichtstrahl und/oder eine Kamera umfasst. So kann beispielsweise der Palettierer bei Unterbrechung des Lichtstrahls oder bei Detektierung eines Benutzers in einem kritischen Bereich durch die Kamera ausgeschaltet werden, sodass von einer laufenden Maschine keine oder eine geringe Gefahr ausgeht. Dies hat den Vorteil, dass einzelne optische Bauteile beispielsweise besonders günstig sein können und einen geringen Bauraumbedarf erfordern.

Es ist des Weiteren bei einer erfindungsgemäßen Sicherheitsvorrichtung denkbar, dass in einem Sicherheitszustand, insbesondere in zumindest zwei Sicherheitszuständen, ein Bereich zwischen der Fördereinheit und der Paletteneinheit durch das Sicherheitselement abgedeckt ist, wenn die Paletteneinheit das Sicherheitselement passiert. Dies stellt eine einfache Möglichkeit dar, unterschiedliche Sicherheitszustände zu realisieren, welche jeweils an die Größe der Paletteneinheit anpassbar sind oder angepasst sind. Besonders der Zeitpunkt, wenn die Paletteneinheit das Sicherheitselement passiert, stellt einen sicherheitskritischen Zeitpunkt im Prozess dar, weil dabei andere, eventuell vorhandene, Sicherheitsmechanismen deaktiviert sein müssen, damit diese bei Abtransport der Paletteneinheit nicht ausgelöst werden oder den Abtransport behindern.

Bei einer erfindungsgemäßen Sicherheitsvorrichtung kann ferner vorgesehen sein, dass der jeweilige Sicherheitszustand des Sicherheitselementes derart auf die Größe, insbesondere eine Breite, der Paletteneinheit oder eine Breite einer Palette der Paletteneinheit abgestimmt ist, dass ein Spalt zwischen dem Sicherheitselement und der Paletteneinheit und/oder zwischen der Fördereinheit und der Paletteneinheit < 500 mm, bevorzugt ≤ 230 mm, besonders bevorzugt ≤ 200 mm, ist, wenn die Paletteneinheit das Sicherheitselement passiert. Somit ist es beispielsweise denkbar, dass das Sicherheitselement in dem dritten Sicherheitszustand keine Abdeckwirkung aufweist und somit der Maschinenauslauf der Fördereinheit auf die größte Größe der Paletteneinheit abgestimmt ist, während der erste und der zweite Sicherheitszustand des Sicherheitselementes jeweils einen Bereich abdecken, sodass der Spalt zwischen dem Sicherheitselement und der Paletteneinheit gering gehalten wird. Ein Spalt von < 500 mm ist hier von Vorteil, damit der komplette Zugang durch einen Benutzer verhinderbar ist. Ein Spalt von ≤ 230 mm erhöht somit insbesondere die Sicherheit noch weiter, sodass auch einzelne Körperteile nicht oder kaum hindurchpassen, während ein Spalt von ≤ 200 mm gleichzeitig Unregelmäßigkeiten im Packstapel mitberücksichtigt, sodass die Sicherheit noch weiter gesteigert ist.

Es ist des Weiteren vorteilhafterweise denkbar, dass bei einer erfindungsgemäßen Sicherheitsvorrichtung eine zusätzliche Überwachungsvorrichtung vorgesehen ist, sodass der unbefugte Zugang erkennbar und der Palettierer abschaltbar ist. Ferner kann insbesondere vorgesehen sein, dass die Überwachungsvorrichtung deaktivierbar ist, wenn die Paletteneinheit die Überwachungsvorrichtung passiert. Dies hat den Vorteil, dass zusätzlich zum Sicherheitselement, welches insbesondere Teilbereiche beim Abtransport von Paletteneinheiten sichert, eine weitere Überwachungsvorrichtung die Sicherheit erhöht, sodass auch Bereiche, welche nicht vom Sicherheitselement abgedeckt sind, durch zumindest eine Überwachungsvorrichtung gedeckt sind. Somit kann vorzugsweise vorgesehen sein, dass durch die zusätzliche Überwachungsvorrichtung ein gesamter Querschnitt der Fördereinheit überwachbar ist. So kann es sich beispielsweise bei der Überwachungsvorrichtung um eine optische Vorrichtung handeln, welche einen Lichtvorhang oder ein bestimmtes Muster aus Lichtschranken oder Ähnlichem aufspannt. Wenn die Paletteneinheit die Überwachungsvorrichtung passiert, ist trotz einer möglichen Deaktivierung der Überwachungsvorrichtung die Sicherheit weiterhin durch das Sicherheitselement gewährleistet. Damit bieten das Sicherheitselement und die zusätzliche Überwachungsvorrichtung in Kombination eine besonders hohe, insbesondere teilweise redundante, Sicherheit gegenüber einem unbefugten Zugang eines Benutzers.

Es ist ferner bei einer erfindungsgemäßen Sicherheitsvorrichtung denkbar, dass zumindest der erste und der zweite Sicherheitszustand und/oder der dritte Sicherheitszustand jeweils unterschiedliche Positionen des Sicherheitselementes aufweisen. Somit kann eine Zustandsänderung beispielsweise durch ein Verschieben oder ein Verlängern des Sicherheitselementes erreicht werden. Dies hat den Vorteil, dass dieses beispielsweise besonders einfach auf mechanische Sicherheitselemente anwendbar ist und durch die Vielzahl der möglichen Antriebsmöglichkeiten eine hohe konstruktive Freiheit bei gleichzeitig geringhaltbaren Kosten ermöglicht. Bei einem optischen Sicherheitselement kann dies dazu führen, dass ein teilweises Deaktivieren nicht notwendig ist, so dass immer die gesamte Optik aktiv ist, jedoch je nach Position unterschiedliche Teilbereiche umfasst.

Im Rahmen der Erfindung kann ferner vorgesehen sein, dass das zumindest eine Sicherheitselement pneumatisch und/oder hydraulisch vom ersten Sicherheitszustand in den zweiten Sicherheitszustand bringbar ist. Dabei kann ferner vorgesehen sein, dass auch der dritte Sicherheitszustand pneumatisch oder hydraulisch ansteuerbar ist und auch jeweils die kinematische Umkehr ist denkbar und insbesondere umfasst. Dabei kann unter pneumatisch insbesondere auch elektropneumatisch verstanden werden. Pneumatische Antriebe weisen hier insbesondere den Vorteil auf, dass diese mit geringem Druck arbeiten können, sodass durch das Sicherheitselement bzw. durch die Zustandsänderung des Sicherheitselementes keine zusätzliche Gefahr für einen Benutzer entsteht. So kann beispielsweise zusätzlich ein Drosselventil vorgesehen sein, welches den Arbeitsdruck entsprechend verringert, sodass eine gleichförmige Bewegung des Sicherheitselementes gewährleistbar ist.

Ferner ist es auch denkbar, dass das zumindest eine Sicherheitselement elektrisch vom ersten Sicherheitszustand in den zweiten Sicherheitszustand bringbar ist. Ein besonderer Vorteil bei einem elektrischen Antrieb ist beispielsweise, dass ein Servomotor stufenlos seine Stellung bestimmen kann bzw. die Stellung des Servomotors stufenlos erkennbar ist, sodass die Sicherheitsvorrichtung besonders flexibel an unterschiedliche Größen der Paletteneinheiten anpassbar sein kann und gleichzeitig besonders sicher ist.

Zusätzlich oder alternativ kann ferner vorgesehen sein, dass das Sicherheitselement manuell vom ersten Sicherheitszustand in den zweiten Sicherheitszustand bringbar ist, wobei ein Benutzer dieses entsprechend verstellt bzw. bewegt. Dies hat den Vorteil, dass der Bauraumbedarf der Sicherheitsvorrichtung deutlich reduziert ist, da weitere Antriebseinheiten nicht notwendig sind und gleichzeitig keine zusätzlichen Produktionskosten entstehen, sodass auch Kostenvorteile vorhanden sein können. Auch die Sicherheit kann durch menschliches Urteilsvermögen weiter gesteigert sein.

Es ist ferner vorzugsweise denkbar, dass bei einer erfindungsgemäßen Sicherheitsvorrichtung eine Steuereinheit vorgesehen ist, durch welche der Sicherheitszustand des Sicherheitselementes ansteuerbar ist. So kann es sich bei der Steuereinheit beispielsweise um eine Speicherprogrammierbare-Steuerung handeln, welche z.B. in Kommunikations- und Wirkverbindung mit einer Steuereinheit des Palettierers stehen kann. Es ist insbesondere eine Steuereinheit denkbar, die zu Regelungsprozessen fähig ist. Durch die Steuereinheit können beispielsweise Sensoren abgefragt werden, sodass die Sicherheit der Sicherheitsvorrichtung weiter gesteigert sein kann und gleichzeitig kann beispielsweise auch die Anpassung der Sicherheitszustände über die Steuervorrichtung mit der Größe der Paletteneinheit abgeglichen werden.

Im Rahmen der Erfindung kann ferner vorgesehen sein, dass ein Antrieb mit dem Sicherheitselement mittelbar oder unmittelbar in Wirkverbindung steht, sodass das zumindest eine Sicherheitselement vom ersten Sicherheitszustand in den zweiten Sicherheitszustand bewegbar ist. Selbstverständlich kann auch hier vorgesehen sein, dass das Sicherheitselement durch den Antrieb in den dritten Sicherheitszustand oder in weitere Sicherheitszustände bewegbar ist. Auch die kinematische Umkehr von dem zweiten Sicherheitszustand in den ersten Sicherheitszustand bzw. vom dritten Sicherheitszustand in den ersten oder in den zweiten Sicherheitszustand ist denkbar. Durch den Antrieb kann beispielsweise eine manuelle Verstellung des Sicherheitselementes nicht notwendig sein, sodass eine weitere Automatisierung und damit eine Kostenreduktion während des Betriebes möglich ist.

Es ist ferner bei einer erfindungsgemäßen Sicherheitsvorrichtung denkbar, dass der Antrieb mit der Steuereinheit in Kommunikationsverbindung steht, sodass der Antrieb durch die Steuereinheit ansteuerbar ist und/oder dass die Position des Antriebs durch die Steuereinheit bestimmbar ist. So kann beispielsweise eine Abfrage von Sensoren des Antriebs erfolgen oder die Position eines Servomotors durch die Steuereinheit bestimmt werden. Dies hat den Vorteil, dass die Sicherheit der Sicherheitsvorrichtung weiter gesteigert ist, da durch die Steuereinheit weitere logische Verknüpfungen der Information des Antriebes bzw. der Größe der Paletteneinheit mit den Informationen des Antriebes verknüpfbar sind.

Eine erfindungsgemäße Sicherheitsvorrichtung kann ferner auch derart ausgestaltet sein, dass der Antrieb ein erstes Stellglied und ein zweites Stellglied aufweist, welche insbesondere in Reihe geschaltet sind. Unter einem Stellglied kann beispielsweise ein Pneumatikzylinder verstanden werden, aber auch ein oder mehrere Hydraulikzylinder oder mechanisch-elektrische Stellglieder sind denkbar. Werden das erste und das zweite Stellglied in Reihe geschaltet, können vorzugsweise drei Zustände erzielt werden, insbesondere wenn die Verfahrlänge der Stellglieder gleich ist. So kann beispielsweise das erste oder das zweite Stellglied eingefahren sein, während das jeweils andere Stellglied ausgefahren ist. Weiterhin können beide Stellglieder eingefahren sein oder beide Stellglieder ausgefahren sein. Sind beide Stellglieder eingefahren, ist die minimale Wirklänge erzielt und sind beide Stellglieder ausgefahren, ist insbesondere die maximale Wirklänge erzielt. Eine derartige Ausgestaltung hat insbesondere den Vorteil, dass sie besonders kostengünstig ist und gleichzeitig bei geringem Bauraumbedarf eine hohe Sicherheit aufweist.

Es ist ferner denkbar, dass bei einer erfindungsgemäßen Sicherheitsvorrichtung der Wirkzustand des ersten und des zweiten Stellgliedes durch zumindest einen, vorzugsweise durch zumindest zwei, Positionsgeber bestimmbar ist. Unter einem Positionsgeber kann im Rahmen der vorliegenden Erfindung beispielsweise ein Sensor verstanden werden, der ein Signal über die jeweilige Position, insbesondere an die Steuereinheit, zur Verfügung stellen kann. Durch einen möglichen Abgleich mit dem Steuersignal kann dies insbesondere die Sicherheit weiter erhöhen.

Es ist des Weiteren denkbar, dass bei einer erfindungsgemäßen Sicherheitsvorrichtung jedes Stellglied zwei Positionsgeber aufweist, sodass eine redundante Positionserkennung des Antriebes möglich ist. Dies kann somit mittelbar zu einer Positionserkennung des Sicherheitselementes führen. Jeweils zwei Positionsgeber sorgen insbesondere für eine redundante Signalgebung und damit eine besonders erhöhte Sicherheit. Die Anordnung der Positionsgeber an den Stellgliedern ermöglicht ferner die Anordnung in einer geschützten Umgebung und gleichzeitig den Einsatz genau abgestimmter Sensorik für die Stellglieder.

Als Positionsgeber kommt beispielsweise zumindest ein kapazitiver Sensor in Betracht, welcher besonders kostengünstig ist.

Bei einer erfindungsgemäßen Sicherheitsvorrichtung können ferner zumindest zwei Positionsgeber vorteilhafterweise am Sicherheitselement vorgesehen sein, sodass eine, insbesondere redundante, Positionserkennung des Sicherheitselementes möglich ist. Eine derartige Anordnung der Positionsgeber am Sicherheitselement führt unmittelbar zu einer Positionserkennung des Sicherheitselementes, wenn das Signal beispielsweise einer Steuereinheit zur Verfügung gestellt wird. Hier ist beispielsweise die Verwendung zumindest eines besonders kostengünstigen Positionsgebers, wie beispielsweise eines mechanischen, optischen und/oder kapazitiven Positionsgebers, möglich. Auch eventuelle kumulierte Fehler durch Toleranzen im Antrieb können durch die Anordnung der Positionsgeber am Sicherheitselement zumindest für die Erkennung reduziert sein.

Im Rahmen der Erfindung kann ferner vorgesehen sein, dass das Sicherheitselement eine erste Schiebetür und/oder eine zweite Schiebetür aufweist. Eine Schiebetür hat den Vorteil, dass diese besonders platzsparend beispielsweise an der Fördereinheit anordenbar ist. So wird für eine derartige Schiebetür beispielsweise kaum Platz in Transportrichtung der Paletteneinheit benötigt. Unter einer Schiebetür kann somit beispielsweise eine Tür verstanden werden, welche im Gegensatz zu Klapptüren mittels einer Parallelverschiebung den Sicherheitszustand ändern kann. Derartige Schiebetüren sind besonders einfach zu fertigen und durch mechanische Sperrwirkung können diese insbesondere auch einen unbefugten Zugang physisch verhindern, sodass die Sicherheit weiter gesteigert ist. Auch die Ausfallsicherheit ist durch die robuste Ausgestaltung einer Schiebetür, insbesondere in widrigen Umgebungen, wie beispielsweise einer Produktionshalle mit einem Palettierer, deutlich verbessert.

Es ist ferner vorteilhafterweise denkbar, dass bei einer erfindungsgemäßen Sicherheitsvorrichtung die Schiebetüren derart ansteuerbar sind und/oder derart miteinander gekoppelt sind, dass sich die Schiebetüren synchron oder im Wesentlichen synchron bewegen. So kann beispielsweise an jeder Seite der Sicherheitsvorrichtung zumindest einer der Antriebe vorgesehen sein oder die Schiebetüren können über ein Getriebe gekoppelt sein. Dies kann beispielsweise einem Benutzer die Rückmeldung geben, dass das System einwandfrei funktioniert wenn z.B. keine der Schiebetüren hakt. Somit kann die Sicherheit in einfacher Art und Weise gewährleistet sein.

Im Rahmen der vorliegenden Erfindung kann weiterhin vorgesehen sein, dass das Sicherheitselement verlängerbar, insbesondere teleskopierbar, ist. Um im eingefahrenen Zustand des Sicherheitselementes einen besonders geringen Bauraumbedarf aufzuweisen, ist die Verlängerbarkeit bzw. die Teleskopierbarkeit des Sicherheitselementes eine kostengünstige Möglichkeit. So kann das Sicherheitselement zum Erreichen von drei unterschiedlichen Sicherheitszuständen beispielsweise drei Einzelelemente umfassen, wobei die Einzelelemente in ihrer Größe abgestuft sein können. Zum Erreichen der Sicherheitszustände können demnach entsprechend eines oder zwei der Einzelelemente aus dem dritten Einzelelement ausfahrbar sein.

Im Rahmen der Erfindung ist es ferner denkbar, dass das Sicherheitselement Optikelemente aufweist, die in Abhängigkeit von der Größe der Paletteneinheit ansteuerbar sind. Dies ist eine weitere Möglichkeit, zusätzlich oder alternativ zu einem mechanischen Sicherheitselement ein optisches Sicherheitselement auszugestalten. Dies bietet den Vorteil, dass das Sicherheitselement besonders einfach ansteuerbar ist, sodass beispielsweise zusätzliche Antriebe nicht notwendig sind und der Bauraumbedarf gering ist. Weiterhin bieten Optikelemente den Vorteil, dass diese besonders einfach mit einer Steuereinheit in Kommunikationsverbindung bringbar sind.

Vorteilhafterweise kann bei einer erfindungsgemäßen Sicherheitsvorrichtung ferner vorgesehen sein, dass die Optikelemente Lichttaster und/oder Lichtschranken und/oder Laserelemente umfassen. Dabei kann unter einem Lichttaster insbesondere eine Vorrichtung verstanden werden, welche einen Lichtstrahl aussendet, welcher zum Erkennen eines Hindernisses, insbesondere zum Erkennen des unbefugten Zugangs durch den Benutzer, keine Rücksendung an die Lichtquelle durch einen Reflektor benötigt. Eine Lichtschranke kann dementsprechend beispielsweise eine derartige Reflektion umfassen, sodass bei Ausbleiben der Reflektion ein Erkennungssignal ausgegeben wird. Ein Laserelement kann vorzugsweise eine Lichtquelle besonders hoher Intensität umfassen. Derartige Optikelemente bieten die Möglichkeit einer einfachen Realisierung einer Abhängigkeit des Sicherheitszustandes des Sicherheitselementes von der Größe der Paletteneinheit. So können beispielsweise die Optikelemente mehrere Lichtschranken aufweisen, welche je nach Größe der Paletteneinheit zuschaltbar bzw. deaktivierbar sind, sodass jeweils nur ein Bereich, welcher vorher beispielsweise durch die Steuereinheit definiert ist, durch das Sicherheitselement abgedeckt ist.

Im Rahmen der Erfindung kann ferner vorgesehen sein, dass das Sicherheitselement zumindest im ersten Sicherheitszustand und im zweiten Sicherheitszustand einen Lichtvorhang aufspannt, der insbesondere, bevorzugt senkrecht, zu einer Bewegungsrichtung der Paletteneinheit aufgespannt ist. So kann das Sicherheitselement vorzugsweise seitlich an der Fördereinheit bzw. an einem Förderausgang oder an einem Förderübergang der Fördereinheit des Palettierers anordenbar sein, sodass der Bauraumbedarf besonders gering ist. Gleichzeitig kann durch den Lichtvorhang eine besonders einfache und gleichzeitig umfangreiche Abdeckung des gewünschten Bereiches erfolgen und vom ersten in den zweiten Sicherheitszustand überführbar sein.

Bei einer erfindungsgemäßen Sicherheitsvorrichtung kann ferner eine, insbesondere optische, Erkennungsvorrichtung vorgesehen sein, durch welche die Größe der Paletteneinheit erfassbar ist. Bei der Größe der Paletteneinheit kann es sich insbesondere um eine Breite der Paletteneinheit handeln. Durch die Erkennungsvorrichtung kann die Größe der nächsten, folgenden Paletteneinheit somit im Betrieb erfassbar sein. Alternativ oder zusätzlich ist es denkbar, dass die Größe der Paletteneinheit durch die Steuereinheit vorgegeben wird. Somit kann beispielsweise durch einen Abgleich des Signals der Erkennungsvorrichtung mit der Vorgabe der Steuereinheit eine weitere Redundanz und somit eine erhöhte Sicherheit gewährleistet werden. Eine optische Erkennungsvorrichtung stellt insbesondere eine kostengünstige und einfache Möglichkeit dar, diese Information zu digitalisieren.

Es ist des Weiteren ferner denkbar, dass bei einer erfindungsgemäßen Sicherheitsvorrichtung die Erkennungsvorrichtung zumindest einen Lichttaster umfasst und/oder derart ausgerichtet ist, dass die Größe der Paletteneinheit in oder entgegengesetzt einer Bewegungsrichtung, insbesondere des Abtransportes, der Paletteneinheit erfassbar ist. Dies hat den Vorteil, dass auch eventuelle Schrägstellungen der Paletteneinheit im Laufe des Abtransportes erfassbar sind. Weiterhin kann die Erfassung der nächsten Palette beispielsweise im Palettierer bereits beim Beladen der Folgepalette realisierbar sein. Die Verwendung eines Lichttasters bietet den Vorteil, dass dieser keinen Reflektor benötigt und damit unabhängig von einem gegenüberliegenden Bauteil anordenbar ist.

Im Rahmen der Erfindung kann ferner vorgesehen sein, dass die Größe der Paletteneinheit redundant bestimmbar ist, insbesondere wobei ein Signal der Erkennungsvorrichtung mit einer Vorgabe der Steuereinheit abgleichbar ist. Dies bietet den Vorteil einer besonders erhöhten Sicherheit, da eine Fehlfunktion bei der Vorgabe der Steuereinheit oder bei dem Signal der Erkennungsvorrichtung leicht erkennbar ist.

Es ist ferner denkbar, dass bei einer erfindungsgemäßen Sicherheitsvorrichtung die Positionserkennung des Antriebs redundant bestimmbar ist, insbesondere wobei ein Signal des Positionsgebers des Antriebs mit einer Vorgabe der Steuereinheit abgleichbar ist. Dies führt insbesondere mittelbar zu einer Positionserkennung des Sicherheitselementes. Damit kann die Sicherheit weiter gesteigert werden, da auch eine Fehlfunktion im Antrieb bzw. in der Vorgabe der Steuereinheit leicht erkennbar ist. Somit kann die Sicherheitsvorrichtung durch eine insbesondere weitere Redundanz besonders sicher klassifizierbar sein.

Ein weiterer Gegenstand der vorliegenden Erfindung ist ein System mit einem Palettierer für das Palettieren eines Fördergutes und einer Sicherheitsvorrichtung, wobei die Sicherheitsvorrichtung zumindest ein Sicherheitselement, welches an einer Fördereinheit des Palettierers, die zum Abtransport von Paletteneinheiten dient, angeordnet ist, aufweist. Dabei ist die Sicherheit gegenüber einem unbefugten Zugang eines Benutzers zur Fördereinheit durch das Sicherheitselement erhöht, wobei das Sicherheitselement zur Anpassung an eine Größe der Paletteneinheit zumindest in einen ersten Sicherheitszustand und einen zweiten Sicherheitszustand bringbar ist. Insbesondere kann die Sicherheitsvorrichtung nach einem der Ansprüche 1 bis 25 ausgestaltet sein. Damit bringt ein erfindungsgemäßes System die gleichen Vorteile mit sich, wie sie ausführlich mit Bezug auf eine erfindungsgemäße Sicherheitsvorrichtung beschrieben worden sind.

Insbesondere handelt es sich bei dem erfindungsgemäßen System um ein besonders sicheres System, welches in besonders einfacher Art und Weise ein vielfältiges Produktspektrum eines Palettierers berücksichtigen kann, so dass dieser besonders flexibel einsetzbar ist.

Es ist des Weiteren denkbar, dass bei einem erfindungsgemäßen System der Palettierer einen Schiebetisch, auf welchen das Fördergut aufbringbar ist, und eine Hubvorrichtung zum Stapeln des Fördergutes auf einer Palette zu einer Paletteneinheit, aufweist. So ist durch eine derartige Kombination von Hubvorrichtung und Schiebetisch eine besonders einfache Prozessfolge beim Palettieren möglich, sodass einzelne Lagen des Fördergutes zunächst auf den Schiebetisch bringbar sind und von dort auf die Hubvorrichtung. Für ein weiteres Stapeln des Fördergutes kann die Hubvorrichtung die Hubhöhe bzw. die Höhe der Aufnahme des Fördergutes anpassen, sodass das Stapeln vom Schiebetisch weiterhin insbesondere beschädigungslos und einfach möglich ist.

Im Rahmen der Erfindung ist es ferner denkbar, dass die Hubvorrichtung unterhalb des Schiebetisches angeordnet ist und die Hubvorrichtung die Fördereinheit zum Abtransport der Paletteneinheit aufweist oder die Fördereinheit an der Hubvorrichtung zum Abtransport der Paletteneinheit angeordnet ist. Dies kann eine weitere Vereinfachung der Prozessfolge darstellen, da der Schiebetisch beispielsweise öffnen kann, um das Stapeln des Fördergutes auf der Hubvorrichtung bzw. einer Palette auf der Hubvorrichtung zu realisieren. Nach erfolgtem Stapeln des Fördergutes auf der Palette zu einer Paletteneinheit kann die Paletteneinheit durch die Fördereinheit zum nächsten Prozessschritt und/oder zum Ausgang des Palettierers oder der Fördereinheit überführt werden.

Im Rahmen der Erfindung ist es ferner denkbar, dass die Fördereinheit einen Rollenförderer und/oder ein Förderband aufweist. Diese stellen einfache Möglichkeiten dar, die Paletteneinheit zu befördern, ohne dass ein negativer Einfluss auf das gestapelte Fördergut genommen wird. So ist beispielsweise eine Kippgefahr der Paletteneinheit reduziert. Weiterhin sind der Rollenförderer bzw. der Förderband bauraum- und kostengünstig in das System integrierbar.

Es ist des Weiteren denkbar, dass bei einem erfindungsgemäßen System die Sicherheitsvorrichtung durch eine Steuereinheit des Palettierers angesteuert wird. Dies ermöglicht eine einfache Integration der digitalen Kommunikation der Sicherheitsvorrichtung in die digitale Kommunikation des Palettierers, insbesondere sodass keine zusätzliche Steuereinheit für die Sicherheitsvorrichtung notwendig ist. So können beispielsweise die notwendigen Steuerbefehle bzw. Algorithmen in die Steuerung des Palettierers integrierbar sein.

Vorteilhafterweise kann bei einem erfindungsgemäßen System ferner vorgesehen sein, dass die Größe der Paletteneinheit redundant bestimmbar ist, insbesondere wobei ein Signal einer Erkennungsvorrichtung der Sicherheitsvorrichtung mit einer Vorgabe der Steuereinheit abgleichbar ist. Dies sorgt insbesondere für eine hohe Sicherheit, da eine Fehlfunktion der Erkennungsvorrichtung oder der Vorgabe der Steuereinheit leicht detektierbar ist und demnach entsprechend Sicherheitsmaßnahmen eingeleitet werden können. Derartige Sicherheitsmaßnahmen können beispielsweise das Stoppen des Produktionsbetriebes des Palettierers und/oder der Fördereinheit umfassen. Auch das Vorsehen einer Warnmeldung ist zusätzlich oder alternativ als Systemreaktion denkbar.

Ebenfalls Gegenstand der Erfindung ist ein Verfahren zur Absicherung einer Fördereinheit eines Palettierers durch eine Sicherheitsvorrichtung mit einem Sicherheitselement, wobei das Verfahren folgende Schritte umfasst:
- Abtransport einer Paletteneinheit,
- Erkennen zumindest einer Größe, insbesondere einer Breite, der Paletteneinheit,
- Überführen des Sicherheitselementes von einem ersten Sicherheitszustand in einen zweiten Sicherheitszustand in Abhängigkeit von der Größe der Paletteneinheit.

Dabei kann die Sicherheitsvorrichtung insbesondere nach einem der Ansprüche 1 bis 25 ausgebildet sein. Damit bringt ein erfindungsgemäßes Verfahren die gleichen Vorteile mit sich, wie sie ausführlich mit Bezug auf eine erfindungsgemäße Sicherheitsvorrichtung beschrieben worden sind. Ferner stellt das Verfahren eine einfache Möglichkeit dar, die Sicherheit in Abhängigkeit eines variierenden Produktportfolios sicherzustellen, wobei kostengünstige Bauteile zum Einsatz kommen können.

Ferner sind die Verfahrensschritte, sofern technisch sinnvoll, in der vorgegebenen oder in einer anderen Reihenfolge denkbar. Insbesondere sind die einzelnen Schritte oder alle Schritte wiederholbar.

Es ist des Weiteren denkbar, dass bei einem erfindungsgemäßen Verfahren das Überführen des Sicherheitselementes vom ersten Sicherheitszustand in den zweiten Sicherheitszustand durch eine Bewegung des Sicherheitselementes erfolgt. Dies stellt eine einfache Möglichkeit dar, eine Änderung des Sicherheitszustandes in robuster Art und Weise, insbesondere mechanisch, zu realisieren. Dabei ist es nicht notwendig, das Sicherheitselement an sich direkt zu verändern, sondern es reicht eine Neupositionierung aus.

Es ist des Weiteren denkbar, dass bei einem erfindungsgemäßen Verfahren das Überführen des Sicherheitselementes vom ersten Sicherheitszustand in den zweiten Sicherheitszustand durch eine Aktivierung und/oder eine Deaktivierung von Optikelementen des Sicherheitselementes erfolgt. Dies stellt eine einfache, bauraumsparende Möglichkeit dar, das Überführen vom ersten Sicherheitszustand in den zweiten Sicherheitszustand oder weitere Sicherheitszustände mitsamt der entsprechenden kinematischen Umkehr zu realisieren, insbesondere da die Optikelemente einfach in ein digitales Kommunikationsnetzwerk einer Vorrichtung, insbesondere der Sicherheitsvorrichtung, integrierbar sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Fig. 1: eine erfindungsgemäße Sicherheitsvorrichtung für einen Palettierer in schematischer Draufsicht in einem ersten Ausführungsbeispiel,
- Fig. 2: eine erfindungsgemäße Sicherheitsvorrichtung für einen Palettierer in schematischer Draufsicht in einem weiteren Ausführungsbeispiel,
- Fig. 3: eine erfindungsgemäße Sicherheitsvorrichtung in schematischer Draufsicht in einem weiteren Ausführungsbeispiel,
- Fig. 4: eine erfindungsgemäße Sicherheitsvorrichtung mit einer Paletteneinheit in schematischer Frontansicht in einem weiteren Ausführungsbeispiel,
- Fig. 5: eine schematische Darstellung einer Kommunikationsverbindung einer erfindungsgemäßen Sicherheitsvorrichtung mit einem Palettierer in einem weiteren Ausführungsbeispiel,
- Fig. 6: eine schematische Darstellung einer Kommunikationsverbindung einer erfindungsgemäßen Sicherheitsvorrichtung mit einem Palettierer in einem weiteren Ausführungsbeispiel,
- Fig. 7: einen schematischen Zusammenhang zwischen einer Erkennungsvorrichtung und einer Steuereinheit,
- Fig. 8a bis c: eine erfindungsgemäße Sicherheitsvorrichtung an einem Förderausgang einer Fördereinheit eines Palettierers,
- Fig. 9a bis c: einen Antrieb einer erfindungsgemäßen Sicherheitsvorrichtung in einem weiteren Ausführungsbeispiel in unterschiedlichen Sicherheitszuständen,
- Fig. 10: ein weiteres Ausführungsbeispiel eines Antriebes einer erfindungsgemäßen Sicherheitsvorrichtung in schematischer Ansicht,
- Fig. 11: eine bevorzugte Ausführungsform eines Teils eines Palettierers bzw. einer Fördereinheit des Palettierers in einem weiteren Ausführungsbeispiel,
- Fig. 12: ein erfindungsgemäßes Verfahren in einem weiteren Ausführungsbeispiel.

In den nachfolgenden Figuren werden für die gleichen technischen Merkmale auch von unterschiedlichen Ausführungsbeispielen identische Bezugszeichen verwendet.

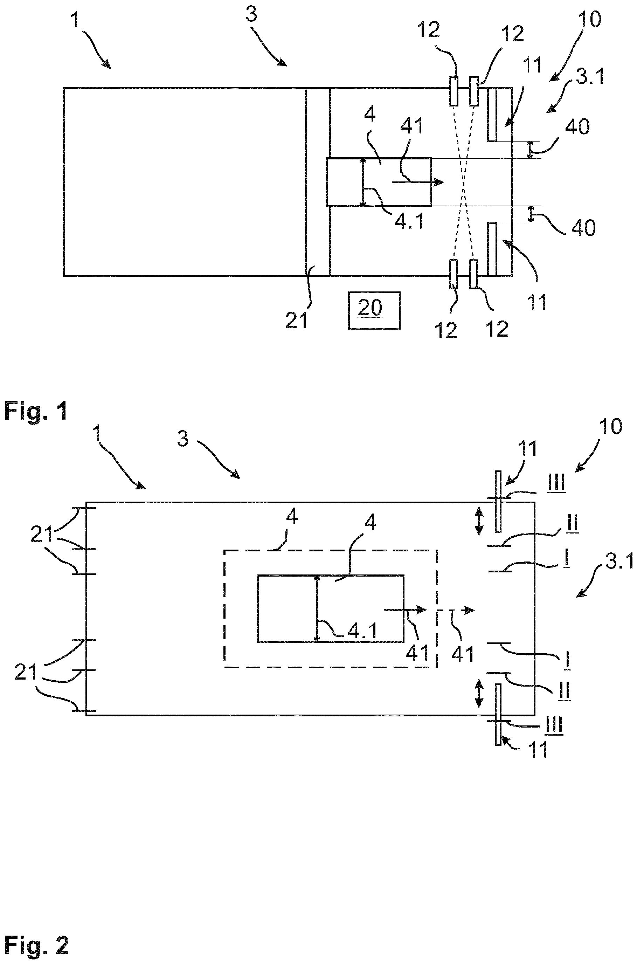

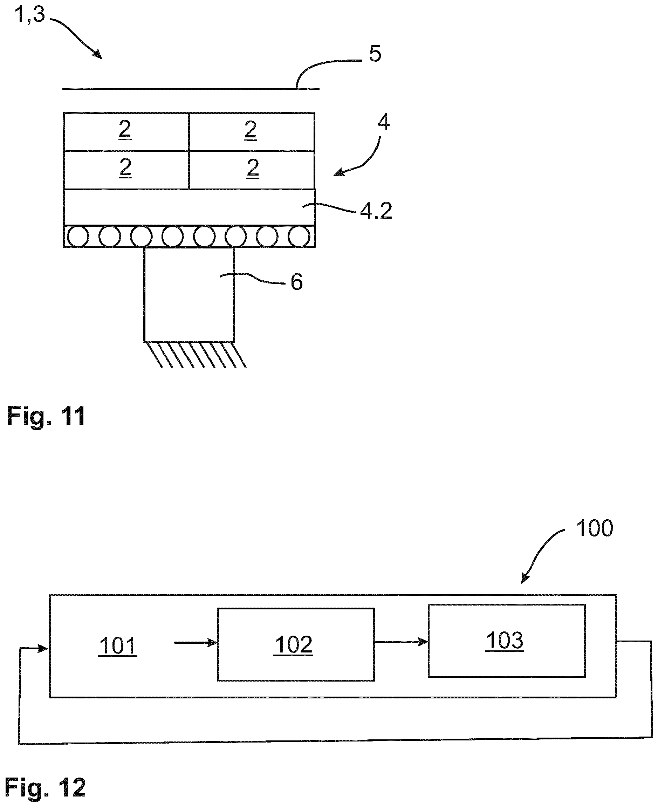

Fig. 1 zeigt eine erfindungsgemäße Sicherheitsvorrichtung 10 für einen Palettierer 1 in einem ersten Ausführungsbeispiel in schematischer Draufsicht. Dabei umfasst die Sicherheitsvorrichtung 10 zumindest ein Sicherheitselement 11, das an einer Fördereinheit 3 des Palettierers 1 anordenbar ist. Die Fördereinheit 3 dient dabei zum Abtransportieren von Paletteneinheiten 4, welche insbesondere eine Palette und durch den Palettierer 1 auf der Palette gestapeltes Fördergut aufweisen. Durch die Sicherheitsvorrichtung 10 kann dabei die Sicherheit gegenüber einem unbefugten Zugang eines Benutzers zur Fördereinheit durch das Sicherheitselement 11 erhöhbar sein. So ist das Sicherheitselement 11 im vorliegenden Ausführungsbeispiel seitlich an einem Förderausgang 3.1 der Fördereinheit 3 angeordnet. Wird die Palette nun zum Förderausgang 3.1 abtransportiert, sorgt das Sicherheitselement 11 insbesondere in den Randbereichen des Förderausgangs 3.1 für eine erhöhte Sicherheit, insbesondere wenn eine Größe der Paletteneinheit 4, vorzugsweise wenn eine Breite 4.1 der Paletteneinheit 4, kleiner der Breite des Förderausgangs 3.1 ist. Bei dem Förderausgang 3.1 kann es sich insbesondere um eine Schnittstelle zum Maschinenausgang des Palettierers 1 und/oder der Fördereinheit 3 handeln. Es kann sich jedoch auch um einen Prozessübergang handeln, wobei der Abtransport der Paletteneinheit 4 zu einer weiteren Prozessstation vorgesehen ist. Im vorliegenden Ausführungsbeispiel ist in einer Bewegungsrichtung 41 der Paletteneinheit 4 zunächst eine Überwachungsvorrichtung 12 angeordnet, welche dazu dient, den Palettierer 1 und/oder die Fördereinheit 3 zu deaktivieren, sofern ein Benutzer den Bereich betritt oder in den Bereich eingreift. Dazu können beispielsweise jeweils zwei oder mehr Elemente der Überwachungsvorrichtung 12 vorgesehen sein, welche Lichtschranken oder einen Lichtvorhang oder dergleichen aufspannen und mit einer Steuereinheit 20 in, insbesondere drahtloser oder kabelgebundener, Kommunikationsverbindung stehen. Wird nun eine der Lichtschranken unterbrochen, ist anzunehmen, dass ein unbefugter Zugang eines Benutzers detektiert ist, und eine Sicherheitsreaktion des Systems, wie beispielsweise ein Abschalten des Palettierers 1, kann von der Steuereinheit 20 initiiert werden. Vorzugsweise sind zumindest zwei Überwachungsmittel, wie beispielsweise Lichtstrahlen, in der Mitte des Förderausgangs 3.1 gekreuzt, sodass auch eine einfache Unterscheidung zwischen einem Benutzer und einer Paletteneinheit 4 möglich ist. Wird nun die Paletteneinheit 4 in Richtung der Überwachungsvorrichtung 12 abtransportiert, werden innerhalb einer bestimmten Reaktionszeit zumindest zwei Überwachungsmittel, insbesondere Lichtstrahlen, unterbrochen, sodass das System dies als Passieren der Paletteneinheit 4 erkennt. Demnach kann beispielsweise die Überwachungsvorrichtung 12, insbesondere durch die Steuereinheit 20, für die Zeit, in welcher die Palette den Förderausgang 3.1 durchläuft, deaktiviert werden. Damit auch die Randbereiche des Förderausgangs 3.1 bei einer geringen Palettenbreite 4.1 weiterhin geschützt sind, ragen die Sicherheitselemente 11 im gezeigten Sicherheitszustand derart in die Fördereinheit 3 bzw. in den Förderausgang 3.1, dass ein Spalt 40 zwischen der Palette 4 und dem Sicherheitselement 11 gering ist. Da jedoch mit einem Palettierer 1 häufig unterschiedliche Größen von Paletteneinheiten 4 bzw. unterschiedliche Breiten 4.1 einer Paletteneinheit 4 erzeugbar sind bzw. handhabbar sind, ist das Sicherheitselement 11 zur Anpassung an die Größe, insbesondere die Breite 4.1, der Paletteneinheit 4 zumindest in einen ersten Sicherheitszustand I und einen zweiten Sicherheitszustand II bringbar. Um die Breite der ankommenden Paletteneinheit 4 zu erkennen, kann vorzugsweise eine Erkennungsvorrichtung 21 vorgesehen sein, die die Breite 4.1 der Paletteneinheit 4 erkennt. Zusätzlich oder alternativ kann auch eine Vorgabe der Steuereinheit 20 die Breite 4.1 der Paletteneinheit 4 vorgeben. Insbesondere ist die Überwachungsvorrichtung 12 zumindest auch auf die Ausführungsbeispiele der Figuren 2 bis 11 anwendbar, um eine weitere Erhöhung der Sicherheit zu realisieren. Auch kann die Überwachungsvorrichtung 12 insbesondere zur Verwendung im Rahmen eines Verfahrens 100 nach dem Ausführungsbeispiel der Figur 12 geeignet sein.

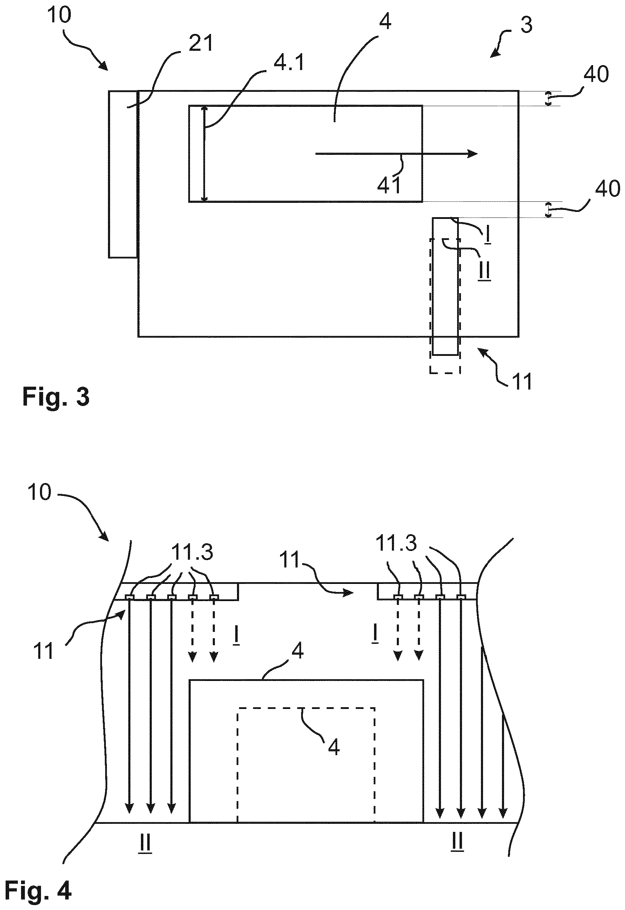

Fig. 2 zeigt eine erfindungsgemäße Sicherheitsvorrichtung 10 in einem weiteren Ausführungsbeispiel in schematischer Draufsicht. Dabei ist die Sicherheitsvorrichtung 10 an einer Fördereinheit 3 eines Palettierers 1 angeordnet. Die Sicherheitsvorrichtung 10 umfasst zumindest ein Sicherheitselement 11, welches drei Sicherheitszustände I, II, III aufweist. Im ersten Sicherheitszustand I deckt das Sicherheitselement 11 einen großen Randbereich eines Förderausgangs 3.1 der Fördereinheit 3 ab. Im dritten Sicherheitszustand III deckt das Sicherheitselement 11 keinen oder nur einen sehr geringen Teil des Förderausgangs 3.1 ab und im zweiten Sicherheitszustand II befindet sich das Sicherheitselement 11 in einem Zwischenzustand, der sich zwischen dem ersten Sicherheitszustand I und dem dritten Sicherheitszustand III befindet. Wird nun eine Palette, die beispielsweise besonders klein ist, entsprechend einer Bewegungsrichtung 41 abtransportiert, ist es wünschenswert, bei geringer Breite 4.1 der Paletteneinheit 4 einen möglichst großen Randbereich abzudecken, sodass die Sicherheit gegenüber einem unbefugten Zugang eines Benutzers zur Fördereinheit 3 durch das Sicherheitselement 11 erhöht ist. Demnach kann das Sicherheitselement 11 der Sicherheitsvorrichtung 10 für die durchgezogen gezeigte Paletteneinheit 4 beispielsweise in den ersten Sicherheitszustand I gebracht werden. Ändert sich die Größe der Folgepaletteneinheit 4 (gestrichelt dargestellt), kann dies beispielsweise durch eine Erkennungsvorrichtung 21 erkannt werden, sodass das Sicherheitselement 11 den Abtransport der Paletteneinheit 4 nicht blockiert und daher in einen zweiten Sicherheitszustand II gebracht wird. Vorzugsweise kann die Erkennungsvorrichtung 21 beidseitig angeordnet sein, so dass die Breite 4.1 der Paletteneinheit 4 zumindest über die Randpunkte der Paletteneinheit 4 erfassbar ist. Dabei kann die Erkennungsvorrichtung 21 ferner parallel oder senkrecht zur Bewegungsrichtung 41 wirken oder senkrecht zur Bewegungsrichtung 41 angeordnet sein. Eine derartige Ausgestaltung der Erkennungsvorrichtung 21 ist entsprechend auch im Ausführungsbeispiel nach Figur 1 denkbar. Insbesondere ist die Erkennungsvorrichtung 21 ferner auch auf die Ausführungsbeispiele der Figuren 4 bis 11 anwendbar, wobei die Erkennungsleistung der Erkennungsvorrichtung 12 auch im Rahmen des Ausführungsbeispiels des Verfahrens gemäß Figur 12 einbringbar sein kann.

Fig. 3 zeigt eine erfindungsgemäße Sicherheitsvorrichtung 10 in schematischer Draufsicht in einem weiteren Ausführungsbeispiel. Dabei verläuft die Bewegungsrichtung 41 im Gegensatz zu den Ausführungsbeispielen der Fign. 1 und 2 exzentrisch, sodass das Sicherheitselement 11 an einer Seite einer Fördereinheit 3 einer Paletteneinheit 4 ausreichen kann. Demnach kann ein Spalt 40, welcher zwischen einer abtransportierten Paletteneinheit 4 und der Fördereinheit 3 oder zwischen der Paletteneinheit 4 und dem Sicherheitselement 11 definiert sein kann, dennoch minimal gehalten werden. So kann es beispielsweise im dargestellten Ausführungsbeispiel ebenfalls ausreichen, dass eine Erkennungsvorrichtung 21 exzentrisch angeordnet ist. Werden nun unterschiedliche Paletteneinheiten 4, insbesondere mit unterschiedlichen Breiten 4.1 der Paletteneinheiten 4, von einem Palettierer 1 produziert und/oder von der Fördereinheit 3 abtransportiert, kann beispielsweise der Spalt 40 zwischen der Paletteneinheit 4 und der Fördereinheit 3, insbesondere prozessgesteuert, vorgegeben sein, sodass das Sicherheitselement 11 bei einer breiteren Paletteneinheit 4 von einem ersten Sicherheitszustand I in einen zweiten Sicherheitszustand II bringbar ist, sodass der Spalt 40 zwischen dem Sicherheitselement 11 und der Paletteneinheit 4 ebenfalls gering gehalten wird bzw. dass der Abtransport der Paletteneinheit 4 durch das Sicherheitselement 11 nicht blockiert ist. Dabei kann das Sicherheitselement 11 ein mechanisches und/oder ein optisches Sicherheitselement sein. Ferner kann es sich bei dem Sicherheitselement 11 um ein teleskopierbares Sicherheitselement 11 handeln, sodass die Sicherheitszustände I, II durch ein Aus- bzw. Einfahren von Teilen des Sicherheitselementes 11 erreichbar sind. Dadurch kann besonders Bauraum gespart werden.

Fig. 4 zeigt eine erfindungsgemäße Sicherheitsvorrichtung 10 in schematischer Frontansicht in einem weiteren Ausführungsbeispiel. Dabei ist zumindest ein Sicherheitselement 11 vorgesehen, welches unterschiedliche Optikelemente 11.3 aufweist, insbesondere sodass ein Lichtvorhang, beispielsweise bestehend aus unterschiedlichen Lichtstrahlen, entsteht. Je nach Größe der Palette können mehr oder weniger Optikelemente 11.3 zu- oder abgeschaltet werden, sodass ein Randbereich neben der Paletteneinheit 4 abgedeckt ist. So kann beispielsweise bei der durchgezogen dargestellten Palette 4 ein Sicherheitszustand II des Sicherheitselementes 11 vorgesehen sein, sodass ein Zugang eines Benutzers in den Randbereich neben der Paletteneinheit 4 detektierbar ist. Wird ein derartiger Zugang detektiert, kann beispielsweise ein Palettierer 1 und/oder eine Fördereinheit 3 abgeschaltet werden oder zumindest teilweise abgeschaltet werden. Folgt auf die durchgezogen dargestellte Paletteneinheit 4 eine kleinere Paletteneinheit 4 (gestrichelt dargestellt) können weitere Optikelemente 11.3 hinzugeschaltet werden, sodass ein breiter Randbereich neben der Paletteneinheit 4 abgedeckt ist. Dies kann den ersten Sicherheitszustand I darstellen. Insbesondere können die Optikelemente 11.3 beispielsweise zumindest auch in den Ausführungsbeispielen der Figuren 1 bis 3 und 5 bis 7 und 9 bis 12 einsetzbar sein.

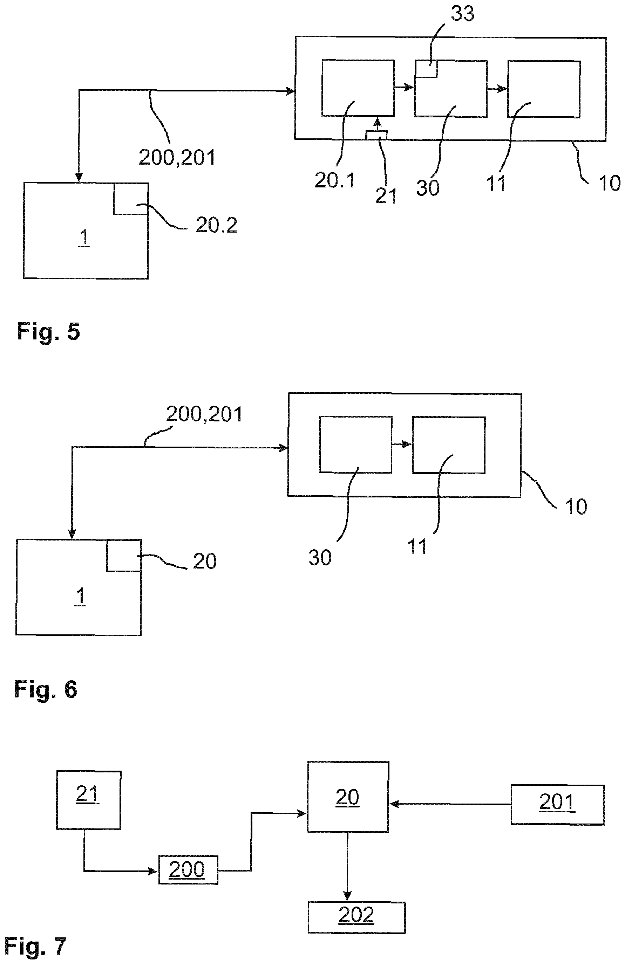

Fig. 5 zeigt eine schematische Darstellung einer Kommunikationsverbindung einer erfindungsgemäßen Sicherheitsvorrichtung 10 mit einem Palettierer 1 in einem weiteren Ausführungsbeispiel. Dabei steht die Sicherheitsvorrichtung 10 in Kommunikationsverbindung mit dem Palettierer 1. So weist der Palettierer 1 eine Steuereinheit 20.2 auf, die wiederum mit einer Steuereinheit 20.1 der Sicherheitsvorrichtung 10 über zumindest ein erstes und ein zweites Signal 200, 201 kommuniziert. So kann beispielsweise über die Signale 200, 201 ein Abgleich der Vorgabe der Steuereinheit 20.2 des Palettierers 1 über die Größe einer nachfolgenden Paletteneinheit 4 der Steuereinheit 20.1 der Sicherheitsvorrichtung 10 übermittelt werden. Die Steuereinheit 20.1 der Sicherheitsvorrichtung 10 wiederum steuert einen Antrieb 30 an, welcher ein Sicherheitselement 11 der Sicherheitsvorrichtung 10 betätigt, sodass das Sicherheitselement 11 zur Anpassung an die Größe der nachfolgenden Paletteneinheit 4 zumindest in einen ersten Sicherheitszustand I und einen zweiten Sicherheitszustand II bringbar ist. Um eine erhöhte Sicherheit zu erzielen, kann beispielsweise die Steuereinheit 20.1 der Sicherheitsvorrichtung 10 mit der Steuereinheit 20.2 des Palettierers 1 auch Informationen einer Erkennungsvorrichtung 21 austauschen, sodass beispielsweise das Signal der Vorgabe der Größe der Paletteneinheit 4 mit einem tatsächlichen Messsignal der Erkennungseinheit 21 der Größe der Paletteneinheit 4 abgleichbar ist. Auch der Antrieb 30 kann über Positionsgeber 33 beispielsweise weitere Informationen liefern, die wiederum abgleichbar sind, um die Sicherheit des gesamten Systems, insbesondere durch Redundanzen, zu erhöhen.

Fig. 6 zeigt eine schematische Darstellung einer Kommunikationsverbindung einer erfindungsgemäßen Sicherheitsvorrichtung 10 mit einem Palettierer 1 in einem weiteren Ausführungsbeispiel. Dabei steht der Palettierer 1 mit der Sicherheitsvorrichtung 10 in Kommunikationsverbindung mittels zumindest eines Signals 200 oder mittels zumindest zweier Signale 200, 201. Im Gegensatz zum Ausführungsbeispiel gemäß Fig. 5 ist nur eine Steuereinheit 20 vorgesehen. Die Steuereinheit 20 ist insbesondere Teil des Palettierers 1 und kann somit in die Hauptsteuerung des Palettierers 1 integriert sein. Dadurch kann die Sicherheitsvorrichtung 10, insbesondere ein Antrieb 30 der Sicherheitsvorrichtung 10, direkt durch die Steuereinheit 20 ansteuerbar sein. Der Antrieb 30 wiederum betätigt vorzugsweise ein Sicherheitselement 11 der Sicherheitsvorrichtung 10, sodass dieses von einem ersten Sicherheitszustand I in einen zweiten Sicherheitszustand II bringbar ist. Dies hat den Vorteil, dass eine zusätzliche Steuereinheit der Sicherheitsvorrichtung 10 nicht notwendig ist und der Palettierer 1 alle notwendigen Daten für den Prozess vorhalten kann. Hier kann auch eine umgekehrte Kommunikationsverbindung von der Sicherheitsvorrichtung 10 zum Palettierer 1 vorgesehen sein, sodass beispielsweise Signale des Antriebs 30 in Bezug auf seine Stellung oder Signale einer Erkennungsvorrichtung 21 an den Palettierer 1 übertragbar sind und ein Sicherheitsabgleich stattfinden kann.

Fig. 7 zeigt einen schematischen Zusammenhang zwischen einer Erkennungsvorrichtung 21 und einer Steuereinheit 20. Dabei kann es sich bei der Steuereinheit 20 um eine palettiererseitige Steuereinheit 20.2 oder um eine steuervorrichtungsseitige Steuereinheit 20.1 handeln. Die Erkennungsvorrichtung 21 erzeugt dabei beispielsweise ein erstes Signal 200, welches aus dem Messsignal der Größe einer Paletteneinheit 4 generiert ist oder dem Messsignal entspricht. Dieses wird der Steuereinheit 20 zur Verfügung gestellt. Ferner verfügt die Steuereinheit 20 über ein weiteres Signal 201, welches beispielsweise eine Prozessvorgabe über die nächste zu produzierende Palettengröße bzw. die nächste zu fördernde Palettengröße beinhalten kann. Der Abgleich der Signale 200, 201 in der Steuereinheit 20 führt schließlich insbesondere zu einer Systemreaktion 202. Diese kann beispielsweise ein Ansteuern eines Sicherheitselementes 11 einer Sicherheitsvorrichtung 10 beinhalten, sodass dieses in einen ersten, zweiten, dritten oder weiteren Sicherheitszustand I, II, III gebracht wird. Sollte der Signalabgleich ergeben, dass die Breite der Paletteneinheit 4 bereits der vorhergehenden Palettenbreite entspricht, könnte beispielsweise keine Systemreaktion erfolgen. Stimmen die Signale 200, 201 nicht überein, kann ferner über die Systemreaktion 202 eine Störung gemeldet werden, sodass das System angehalten wird oder eine weitere Warnreaktion oder dergleichen vorgesehen wird. Durch die Redundanz der Signale 200, 201 kann die Sicherheit des Systems in erheblichem Maße gesteigert sein.

Insbesondere sind die Ausführungsbeispiele der Figuren 5 bis 7 z.B. einzeln oder in Kombination der Ausführungsbeispiele der Figuren 5 und 7 oder 6 und 7 zumindest auf die Ausführungsbeispiele der Figuren 1 bis 3 und 8 bis 12 anwendbar.

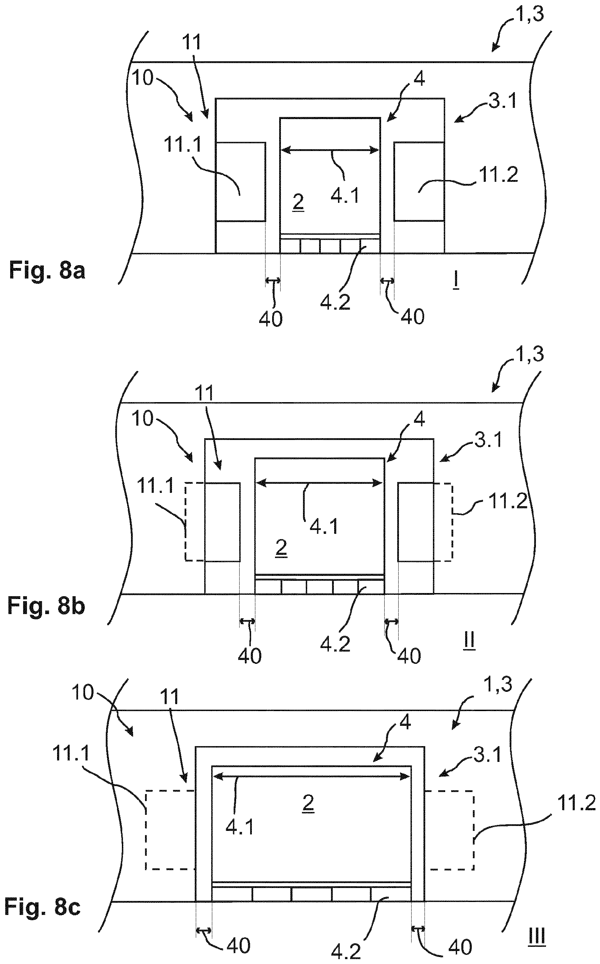

Die Figuren 8a bis c zeigen eine Sicherheitsvorrichtung 10 an einem Förderausgang 3.1 einer Fördereinheit 3 eines Palettierers 1. Dabei weist die Sicherheitsvorrichtung 10 ein Sicherheitselement 11 in Form einer ersten Schiebetür 11.1 und einer zweiten mechanischen Schiebetür 11.2 auf. Diese sind in Richtung einer Paletteneinheit 4, d.h. senkrecht zur Bewegungsrichtung 41 der Paletteneinheit 4 verstellbar, sodass eine Breite 4.1 der Paletteneinheit 4 durch die Sicherheitsvorrichtung 10 berücksichtigt werden kann. Dabei kann es insbesondere ausreichen, wenn die Sicherheitsvorrichtung 10 bzw. die Schiebetüren 11.1, 11.2 nur einen Teilbereich des Randes abdecken, sodass ein Zutritt durch eine Person verhindert ist. Vorzugsweise kann ein Spalt 40 zwischen dem Sicherheitselement 11 und der Paletteneinheit 4 bzw. der Fördereinheit 3 und der Paletteneinheit 4 minimiert sein, sodass der Spalt 40 kleiner 500 mm, bevorzugt ≤ 230 mm, besonders bevorzugt ≤ 200 mm beträgt.

Eine Paletteneinheit 4 kann gemäß dem vorliegenden Ausführungsbeispiel vorzugsweise ein Fördergut 2 aufweisen, welches auf der Palette 4.2 gestapelt ist. Ändert sich nun gemäß der Fign. 8a bis c eine Breite 4.1 der Paletteneinheit 4 im Laufe des Prozesses, beispielsweise indem die nächste Paletteneinheit 4 breiter ist, ist das Sicherheitselement 11 an die Breite 4.1 der Paletteneinheit 4 anpassbar. Dies wird beispielsweise in Fig. 8a dadurch realisiert, dass die Schiebetüren 11.1, 11.2 in einen ersten Sicherheitszustand 11.1 gebracht sind, wobei die Schiebetüren 11.1, 11.2 vollständig oder nahezu vollständig ausgefahren sind. Gemäß Fig. 8b ist eine Zwischenstellung der Schiebetüren 11.1, 11.2 dargestellt, welche einen zweiten Sicherheitszustand II des Sicherheitselementes 11 repräsentiert. Dabei sind die Schiebetüren 11.1, 11.2 nur teilweise in den Förderausgang 3.1 eingebracht, sodass im Vergleich zur Figur 8a bzw. zum ersten Sicherheitszustand I eine breitere Paletteneinheit 4 abtransportierbar ist. Fig. 8c zeigt ferner einen dritten Sicherheitszustand III des Sicherheitselementes 11, wobei die Schiebetüren 11.1, 11.2 vollständig oder nahezu vollständig nach außen verfahren sind, sodass eine maximale Breite 4.1 der Paletteneinheit 4 abtransportierbar ist. Auch dabei ist der Spalt 40 minimal gehalten. Insbesondere können die Schiebetüren 11.1, 11.2 beispielsweise zumindest auch im Rahmen der Ausführungsbeispiele der Figuren 1 bis 3 und 5 bis 7 und 9 bis 12 einsetzbar sein.

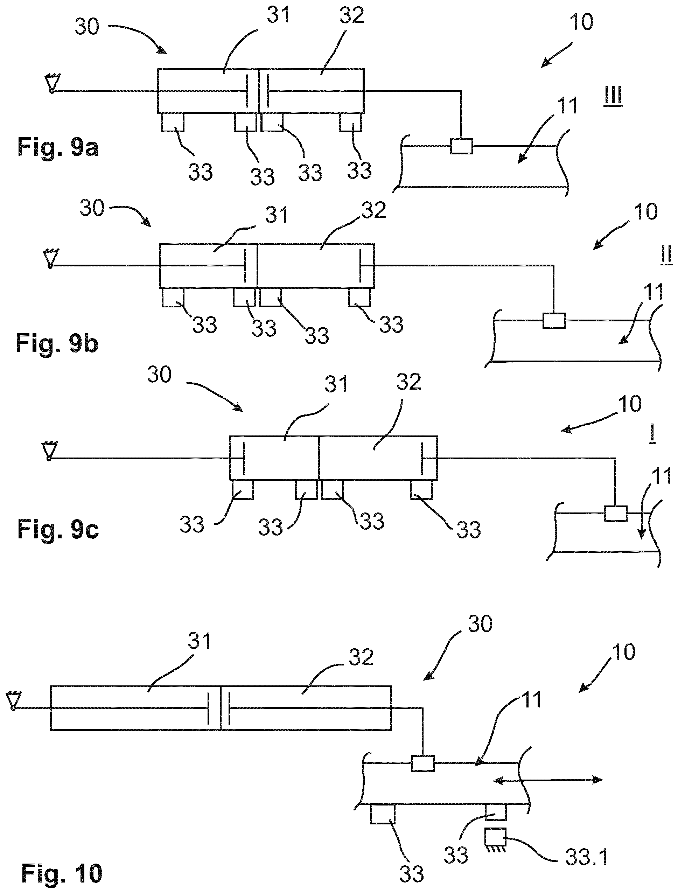

Die Figuren 9a bis c zeigen einen Antrieb 30 einer Sicherheitsvorrichtung 10 in einem weiteren Ausführungsbeispiel in unterschiedlichen Sicherheitszuständen. So weist der Antrieb 30 ein erstes Stellglied 31 und ein zweites Stellglied 32 auf, welche insbesondere in Reihe geschaltet sind. Die Stellglieder 31, 32 können vorzugsweise Pneumatikzylinder sein. Durch die geschickte Reihenschaltung sind insbesondere drei Sicherheitszustände I, II, III eines Sicherheitselementes 11 der Sicherheitsvorrichtung 10 erreichbar. So kann beispielsweise ein Kolbenelement des ersten Stellgliedes 31 fest gelagert sein. Ein Kolbenelement des zweiten Stellgliedes 32 kann ferner mit dem Sicherheitselement 11 verbunden sein. Sind nun beide Stellglieder 31, 32 eingefahren, befindet sich auch das Sicherheitselement 11 in einer eingefahrenen Position und damit beispielsweise im dritten Sicherheitszustand III. Wird eines der Stellglieder 31, 32 betätigt, wie beispielsweise in Fig. 9b dargestellt, kann der zweite Sicherheitszustand II erreicht werden. Im dargestellten Ausführungsbeispiel ist das zweite Stellglied 32 einzeln betätigt, es ist jedoch auch denkbar, dass das erste Stellglied 31 betätigt ist, während das zweite Stellglied 32 unbetätigt ist. Sind beide Verfahrwege der Stellglieder 31, 32 gleich groß, ist dies insbesondere für den zweiten Sicherheitszustand II nicht maßgeblich. Es ist jedoch auch denkbar, dass unterschiedliche Verfahrwege der Stellglieder 31, 32 vorgesehen sind, sodass ein weiterer Sicherheitszustand erreichbar ist. Gemäß Fig. 9c sind beide Stellglieder 31, 32 ausgefahren, sodass ein erster Sicherheitszustand I des Sicherheitselementes 11 der Sicherheitsvorrichtung 10 erreicht ist. Dabei ist insbesondere auch das Sicherheitselement 11 maximal verfahren. Um ein Signal über den Verfahrweg an eine Steuervorrichtung 20 eines Palettierers 1 und/oder der Sicherheitsvorrichtung 10 abgeben zu können, weisen die Stellglieder 31, 32 jeweils zwei Positionsgeber 33 auf. Dabei können beispielsweise die Positionsgeber 33, beispielsweise als kapazitive Sensoren, denkbar einfach aufgebaut sein, indem diese lediglich ein Signal 1 oder 0 liefern, welches aussagt, ob der Kolben des Kolbenelementes des jeweiligen Stellgliedes 31, 32 gerade an der Position des jeweiligen Positionsgebers 33 vorhanden ist. Stimmen nun beide Signale der Positionsgeber 33 des jeweiligen Stellgliedes 31, 32 mit der Steuervorgabe der Steuereinheit 20 überein, scheinen insbesondere beide Positionsgeber 33 zu funktionieren. Andernfalls kann dies auf eine Fehlfunktion der Positionsgeber 33 oder des Antriebes 30 generell, insbesondere der Positionierung des Antriebes 30, hindeuten. Demnach können Gegenmaßnahmen eingeleitet werden, sodass das System insgesamt sicherer ist. Insbesondere ist der Antrieb 30 des vorliegenden Ausführungsbeispiels zumindest auch im Rahmen der Ausführungsbeispiele der Figuren 1 bis 3 und 5 bis 8 und 11 bis 12 anwendbar.

Fig. 10 zeigt ein weiteres Ausführungsbeispiel eines Antriebes 30 einer Sicherheitsvorrichtung 10 mit einem ersten Stellglied 31 und einem zweiten Stellglied 32. Dabei kann der Antrieb 30 ähnlich funktionieren wie der Antrieb des Ausführungsbeispiels der Fig. 9. Im vorliegenden Ausführungsbeispiel sind die Positionsgeber 33 jedoch nicht an den Stellgliedern 31, 32 angeordnet, sondern am Sicherheitselement 11 und wirken mit einem unbeweglichen Positionsgeber 33.1. Dabei kann es sich beispielsweise um einen Näherungssensor handeln, der die Positionsgeber 33 erkennt, wenn das Sicherheitselement 11 verfährt, um den Sicherheitszustand zu ändern. Dann erkennt der unbewegliche Positionsgeber 33.1 und/oder die Positionsgeber 33 am Sicherheitselement 11 das jeweilige Gegenüber, sodass die Position des Sicherheitselementes 11 direkt messbar ist. Dadurch können beispielsweise Toleranzen des Antriebes aus der Messung auslassbar sein, sodass eine genauere Steuerung des Sicherheitselementes 11 möglich sein kann. Insbesondere ist der Antrieb 30 des vorliegenden Ausführungsbeispiels zumindest auch im Rahmen der Ausführungsbeispiele der Figuren 1 bis 3 und 5 bis 8 und 11 bis 12 anwendbar.

Fig. 11 zeigt schematisch eine bevorzugte Ausführungsform eines Teils eines Palettierers 1 bzw. einer Fördereinheit 3 des Palettierers 1. Dabei weist der Palettierer 1 einen Schiebetisch 5 auf, auf welchen Lagen eines Fördergutes 2 aufbringbar sind. Nach Fertigstellung einer Lage kann der Schiebetisch beispielsweise öffnen oder verkippen, sodass die Lage des Fördergutes 2 auf eine Palette 4.2 einer Hubvorrichtung 6 gebracht wird. Nach dem Aufschichten einer Lage des Fördergutes 2 auf der Palette 4.2 verfährt die Hubvorrichtung 6 vertikal, sodass Platz für eine weitere Lage des Fördergutes 2 geschaffen ist, bis eine Paletteneinheit 4 aus mehreren Lagen des Fördergutes 2 und der Palette 4.2 gebildet ist. Damit die Paletteneinheit 4 abtransportierbar ist, kann ferner vorgesehen sein, dass die Fördereinheit 3 einen Rollenförderer oder ein Förderband umfasst.

Fig. 12 zeigt ein erfindungsgemäßes Verfahren 100 zur Absicherung einer Fördereinheit 3 eines Palettierers 1. Dabei ist in einem Schritt 101 ein Abtransport einer Paletteneinheit 4 vorgesehen. Bei diesem Abtransport kann ferner ein Schritt 102 vorgesehen sein, welcher ein Erkennen zumindest einer Größe, insbesondere einer Breite 4.2, der Paletteneinheit 4 umfasst. Damit die Sicherheit des Palettierers 1 erhöht ist, wird das Sicherheitselement 11 in einem Schritt 103 von einem ersten Sicherheitszustand I in einen zweiten Sicherheitszustand II in Abhängigkeit von der Größe der Paletteneinheit 4 überführt. Dabei können die Schritte des Verfahrens 100 in der vorgesehenen Reihenfolge durchgeführt werden oder aber in einer anderen Reihenfolge. Insbesondere können alle oder einzelne Schritte des Verfahrens 100 wiederholt werden. Ferner kann der Schritt 103 des Überführens des Sicherheitselementes 11 durch eine Bewegung des Sicherheitselementes 11 oder durch eine Aktivierung und/oder eine Deaktivierung von Optikelementen 11.3 des Sicherheitselementes 11 erfolgen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Palettierer
- 2: Fördergut
- 3: Fördereinheit
- 4: Paletteneinheit
- 4.1: Breite der Paletteneinheit
- 4.2: Palette
- 5: Schiebetisch
- 6: Hubvorrichtung

- 10: Sicherheitsvorrichtung
- 11: Sicherheitselement
- 11.1: erste Schiebetür
- 11.2: zweite Schiebetür
- 11.3: Optikelement
- 12: Überwachungsvorrichtung

- 20: Steuereinheit
- 20.1: Steuereinheit der Sicherheitsvorrichtung 10
- 20.2: Steuereinheit des Palettierers 1
- 21: Erkennungsvorrichtung

- 30: Antrieb
- 31: erstes Stellglied
- 32: zweites Stellglied
- 33: Positionsgeber
- 33.1: bewegliche Positionsgeber

- I: erster Sicherheitszustand
- II: zweiter Sicherheitszustand
- III: dritter Sicherheitszustand
- 100: Verfahren
- 101: Abtransport
- 102: Erkennen
- 103: Überführen

## Patentansprüche

1. System mit einem Palettierer (1) für das Palettieren eines Fördergutes (2) und
einer Sicherheitsvorrichtung (10) wobei die Sicherheitsvorrichtung (10) zumindest ein Sicherheitselement (11), welches an einer Fördereinheit (3) des Palettierers (1), die zum Abtransport von Paletteneinheiten (4) dient, angeordnet ist, aufweist,
wobei die Sicherheit gegenüber einem unbefugten Zugang eines Benutzers zur Fördereinheit (3) durch das Sicherheitselement (11) erhöht ist,
**dadurch gekennzeichnet,**
**dass** das Sicherheitselement (11) zur Anpassung an eine Breite (4.1) der Paletteneinheit (4) zumindest in einen ersten Sicherheitszustand (I) und einen zweiten Sicherheitszustand (II) bringbar ist,
wobei ein Antrieb (30) mit dem Sicherheitselement (11) mittelbar oder unmittelbar in Wirkverbindung steht, so dass das zumindest eine Sicherheitselement (11) vom ersten Sicherheitszustand (I) in den zweiten Sicherheitszustand (II) bewegbar ist, und/oder das Sicherheitselement (11) Optikelemente (11.3) aufweist, die in Abhängigkeit von der Breite (4.1) der Paletteneinheit (4) ansteuerbar sind.

2. System nach Anspruch 1,
**dadurch gekennzeichnet,**
**dass** das Sicherheitselement (11) in einen dritten Sicherheitszustand (III) bringbar ist.

3. System nach Anspruch 1 oder 2,
**dadurch gekennzeichnet,**
**dass** das Sicherheitselement (11) mechanisch und/oder optisch wirkt.

4. System nach einem der vorhergehenden Ansprüche,
**dadurch gekennzeichnet,**
**dass** in zumindest einem Sicherheitszustand (I, II, III), insbesondere in zumindest zwei Sicherheitszuständen (I, II, III), ein Bereich zwischen der Fördereinheit (3) und der Paletteneinheit (4) durch das Sicherheitselement (11) abgedeckt ist, wenn die Paletteneinheit (4) das Sicherheitselement (11) passiert.

5. System nach einem der vorhergehenden Ansprüche,
**dadurch gekennzeichnet,**
**dass** der jeweilige Sicherheitszustand (I, II, III) des Sicherheitselementes (11) derart auf die Breite (4.1) der Paletteneinheit (4) oder einer Palette (4.2) der Paletteneinheit (4) abgestimmt ist, dass ein Spalt (40) zwischen dem Sicherheitselement (11) und der Paletteneinheit (4) und/oder zwischen der Fördereinheit (3) und der Paletteneinheit (4) kleiner 500 mm, bevorzugt kleiner oder gleich 230 mm, besonders bevorzugt kleiner oder gleich 200 mm, ist, wenn die Paletteneinheit (4) das Sicherheitselement (11) passiert.

6. System nach einem der vorhergehenden Ansprüche,
**dadurch gekennzeichnet,**
**dass** eine zusätzliche Überwachungsvorrichtung (12) vorgesehen ist, so dass der unbefugte Zugang erkennbar und der Palettierer (1) abschaltbar ist, und insbesondere dass die Überwachungsvorrichtung (12) deaktivierbar ist, wenn die Paletteneinheit (4) die Überwachungsvorrichtung (12) passiert.

7. System nach einem der vorhergehenden Ansprüche,
**dadurch gekennzeichnet,**
**dass** zumindest der erste und der zweite Sicherheitszustand (I, II) und/oder der dritte Sicherheitszustand (III) jeweils unterschiedliche Positionen des Sicherheitselementes (11) aufweisen.

8. System nach einem der vorhergehenden Ansprüche,
**dadurch gekennzeichnet,**
**dass** das zumindest eine Sicherheitselement (11) pneumatisch und/oder hydraulisch vom ersten Sicherheitszustand (I) in den zweiten Sicherheitszustand (II) bringbar ist.

9. System nach einem der vorhergehenden Ansprüche,
**dadurch gekennzeichnet,**
**dass** eine Steuereinheit (20) vorgesehen ist, durch welche der Sicherheitszustand (I, II, III) des Sicherheitselementes (11) ansteuerbar ist.

10. System nach einem der vorhergehenden Ansprüche,
**dadurch gekennzeichnet,**
**dass** der Antrieb (30) mit der Steuereinheit (20) in Kommunikationsverbindung steht, so dass der Antrieb (30) durch die Steuereinheit (20) ansteuerbar ist und/oder dass die Position des Antriebs (30) durch die Steuereinheit (20) bestimmbar ist.

11. System nach einem der vorhergehenden Ansprüche,
**dadurch gekennzeichnet,**
**dass** der Antrieb (30) ein erstes Stellglied (31) und ein zweites Stellglied (32) aufweist, welche insbesondere in Reihe geschaltet sind.

12. System nach einem der vorhergehenden Ansprüche,
**dadurch gekennzeichnet,**
**dass** der Wirkzustand des ersten und des zweiten Stellgliedes (31, 32) durch zumindest einen, vorzugsweise durch zumindest zwei, Positionsgeber (33) bestimmbar ist.

13. System nach einem der vorhergehenden Ansprüche,
**dadurch gekennzeichnet,**
**dass** jedes Stellglied (31, 32) zwei Positionsgeber (33) aufweist, so dass eine redundante Positionserkennung des Antriebes (30) möglich ist.

14. System nach einem der vorhergehenden Ansprüche,
**dadurch gekennzeichnet,**
**dass** zumindest zwei Positionsgeber (33) am Sicherheitselement (11) vorgesehen sind, so dass eine, insbesondere redundante, Positionserkennung des Sicherheitselementes (11) möglich ist.

15. System nach einem der vorhergehenden Ansprüche,
**dadurch gekennzeichnet,**
**dass** das Sicherheitselement (11) eine erste Schiebetür (11.1) und/oder eine zweite Schiebetür (11.2) aufweist.

16. System nach einem der vorhergehenden Ansprüche,
**dadurch gekennzeichnet,**
**dass** die Schiebetüren (11.1, 11.2) derart ansteuerbar sind und/oder derart miteinander gekoppelt sind, dass sich die Schiebetüren (11.1, 11.2) synchron oder im Wesentlichen synchron bewegen.

17. System nach einem der vorhergehenden Ansprüche,
**dadurch gekennzeichnet,**
**dass** das Sicherheitselement (11) verlängerbar, insbesondere teleskopierbar, ist.

18. System nach einem der vorhergehenden Ansprüche,
**dadurch gekennzeichnet,**
**dass** die Optikelemente (11.3) Lichttaster und/oder Lichtschranken und/oder Laserelemente umfassen.

19. System nach einem der vorhergehenden Ansprüche,
**dadurch gekennzeichnet,**
**dass** das Sicherheitselement (11) zumindest im ersten Sicherheitszustand (I) und im zweiten Sicherheitszustand (II) einen Lichtvorhang aufspannt, der insbesondere, bevorzugt senkrecht, zu einer Bewegungsrichtung (41) der Paletteneinheit (4) aufgespannt ist.

20. System nach einem der vorhergehenden Ansprüche,
**dadurch gekennzeichnet,**
**dass** eine, insbesondere optische, Erkennungsvorrichtung (21) vorgesehen ist, durch welche die Breite (4.1) der Paletteneinheit (4) erfassbar ist, insbesondere die Erkennungsvorrichtung (21) zumindest einen Lichttaster umfasst und/oder derart ausgerichtet ist, dass die Breite (4.1) der Paletteneinheit (4) in oder entgegengesetzt einer Bewegungsrichtung (41) der Paletteneinheit (4) erfassbar ist.

21. System nach einem der vorhergehenden Ansprüche,
**dadurch gekennzeichnet,**
**dass** die Breite (4.1) der Paletteneinheit (4) redundant bestimmbar ist, insbesondere wobei ein Signal der Erkennungsvorrichtung (21) mit einer Vorgabe der Steuereinheit (20) abgleichbar ist.

22. System nach einem der vorhergehenden Ansprüche,
**dadurch gekennzeichnet,**
**dass** die eine Positionserkennung des Antriebs (30) redundant bestimmbar ist, insbesondere wobei ein Signal des Positionsgebers (33) des Antriebs (30) mit einer Vorgabe der Steuereinheit (20) abgleichbar ist.

23. System nach einem der vorhergehenden Ansprüche,
**dadurch gekennzeichnet,**
**dass** der Palettierer (1) einen Schiebetisch (5), auf welchen das Fördergut (2) aufbringbar ist, und eine Hubvorrichtung (6) zum Stapeln des Fördergutes (2) auf einer Palette (4.2) zu einer Paletteneinheit (4), aufweist, wobei insbesondere die Hubvorrichtung (6) unterhalb des Schiebetisches (5) angeordnet ist und die Hubvorrichtung (6) die Fördereinheit (3) zum Abtransport der Paletteneinheit (4) aufweist oder die Fördereinheit (3) an der Hubvorrichtung (6) zum Abtransport der Paletteneinheit (4) angeordnet ist.

24. System nach einem der vorhergehenden Ansprüche,
**dadurch gekennzeichnet,**
**dass** die Fördereinheit (3) einen Rollenförderer und/oder ein Förderband aufweist.

25. System nach einem der vorhergehenden Ansprüche,
**dadurch gekennzeichnet,**
**dass** die Sicherheitsvorrichtung (10) durch eine Steuereinheit (20) des Palettierers (1) angesteuert wird.

26. System nach einem der vorhergehenden Ansprüche,
**dadurch gekennzeichnet,**
**dass** die Breite (4.1) der Paletteneinheit (4) redundant bestimmbar ist, insbesondere wobei ein Signal einer Erkennungsvorrichtung (21) der Sicherheitsvorrichtung (10) mit einer Vorgabe der Steuereinheit (20) abgleichbar ist.

27. Verfahren (100) zur Absicherung einer Fördereinheit (3) eines Palettierers (1) durch eine Sicherheitsvorrichtung (10) für den Palettierer (1) mit zumindest einem Sicherheitselement (11), welches an der Fördereinheit (3) des Palettierers (1), die zum Abtransport von Paletteneinheiten (4) dient, anordenbar ist,
wobei die Sicherheit gegenüber einem unbefugten Zugang eines Benutzers zur Fördereinheit (3) durch das Sicherheitselement (11) erhöhbar ist,
wobei das Sicherheitselement (11) zur Anpassung an eine Breite (4.1) der Paletteneinheit (4) zumindest in einen ersten Sicherheitszustand (I) und einen zweiten Sicherheitszustand (II) bringbar ist,
wobei das Verfahren (100) folgende Schritte umfasst:
- Abtransport einer Paletteneinheit (4),
- Erkennen zumindest einer Breite (4.1) der Paletteneinheit (4),
- Überführen des Sicherheitselementes (11) von einem ersten Sicherheitszustand (I) in einen zweiten Sicherheitszustand (II) in Abhängigkeit von der Breite (4.1) der Paletteneinheit (4).

28. Verfahren (100) nach Anspruch 27,
**dadurch gekennzeichnet,**
**dass** das Überführen des Sicherheitselements (11) vom ersten Sicherheitszustand (I) in den zweiten Sicherheitszustand (II) durch eine Bewegung des Sicherheitselementes (11) erfolgt und/oder dass das Überführen des Sicherheitselementes (11) vom ersten Sicherheitszustand (I) in den zweiten Sicherheitszustand (II) durch eine Aktivierung und/oder eine Deaktivierung von Optikelementen (11.3) des Sicherheitselementes (11) erfolgt.

## Claims

1. A system having a palletizer (1) for palletizing a material to be conveyed (2) and a security device (10) wherein the security device (10) has at least one security element (11), which is arranged on a conveyor unit (3) of the palletizer (1), which is used to transport pallet units (4) away, wherein security against an unauthorized user's access to the conveyor unit (3) can be increased by the security element (11),
**characterized in**
**that** the security element (11) can be brought into at least a first security state (I) and a second security state (II) in order to adapt it to a width (4.1) of the pallet unit (4), wherein a drive (30) is directly or indirectly operatively connected to the security element (11), so that the at least one security element (11) can be moved from the first security state (I) into the second security state (II), and/or the security element (11) has optical elements (11.3), which can be controlled depending on the width (4.1) of the pallet unit (4).

2. The system according to claim 1,
**characterized in**
**that** the security element (11) can be brought into a third security state (III).

3. The system according to claim 1 or 2,
**characterized in**
**that** the security element (11) acts mechanically and/or optically.

4. The system according to any one of the preceding claims,
**characterized in**
**that** in at least one security state (I, II, III), in particular in at least two security states (I, II, III), an area between the conveyor unit (3) and the pallet unit (4) is covered by the security element (11), when the pallet unit (4) passes the security element (11).

5. The system according to any one of the preceding claims, **characterized in that** the respective security state (I, II, III) of the security element (11) is matched to the width (4.1) of the pallet unit (4) or a pallet (4.2) the pallet unit (4) in such a way that a gap (40) between the security element (11) and the pallet unit (4) and/or between the conveyor unit (3) and the pallet unit (4) is less than 500 mm, preferably less than or equal to 230 mm, particularly preferably less than or equal to 200 mm, when the pallet unit (4) passes the security element (11).

6. The system according to any one of the preceding claims, **characterized in that** an additional monitoring device (12) is provided so that the unauthorized access can be detected and the palletizer (1) can be switched off, and in particular that the monitoring device (12) can be deactivated, when the pallet unit (4) passes the monitoring device (12).

7. The system according to any one of the preceding claims, **characterized in that** at least the first and the second security state (I, II) and/or the third security state (III) each have different positions of the security element (11).

8. The system according to any one of the preceding claims, **characterized in that** the at least one security element (11) can be brought pneumatically and/or hydraulically from the first security state (I) into the second security state (II).

9. The system according to any one of the preceding claims, **characterized in that** a control unit (20) is provided, by means of which the security state (I, II, III) of the security element (11) can be controlled.

10. The system according to any one of the preceding claims, **characterized in that** the drive (30) is in communication connection with the control unit (20) so that the drive (30) can be controlled by the control unit (20) and/or that the position of the drive (30) can be determined by the control unit (20).

11. The system according to any one of the preceding claims, **characterized in that** the drive (30) has a first actuator (31) and a second actuator (32), which are connected in particular in series.

12. The system according to any one of the preceding claims, **characterized in that** the active state of the first and second actuator (31, 32) can be determined by at least one, preferably by at least two, position sensors (33).

13. The system according to any one of the preceding claims, **characterized in that** each actuator (31, 32) has two position sensors (33), so that a redundant position detection of the drive (30) is possible.

14. The system according to any one of the preceding claims, **characterized in that** at least two position sensors (33) are provided on the security element (11), so that a, in particular redundant, position detection of the security element (11) is possible.

15. The system according to any one of the preceding claims, **characterized in that** the security element (11) has a first sliding door (11.1) and/or a second sliding door (11.2).

16. The system according to any one of the preceding claims, **characterized in that** the sliding doors (11.1, 11.2) can be controlled and/or are coupled to one another in such a way that the sliding doors (11.1, 11.2) move synchronously or substantially synchronously.

17. The system according to any one of the preceding claims, **characterized in that** the security element (11) can be extended, in particular telescopically.

18. The system according to any one of the preceding claims, **characterized in that** optical elements (11.3) comprise light scanners and/or light barriers and/or laser elements.

19. The system according to any one of the preceding claims, **characterized in that** at least in the first security state (I) and in the second security state (II) the security element (11) spans a light curtain which, in particular, is stretched preferably perpendicularly to a direction of movement (41) of the pallet unit (4).

20. The system according to any one of the preceding claims, **characterized in that** a, in particular optical, detection device (21) is provided, by means of which the width (4.1) of the pallet unit (4) can be detected, in particular the detection device (21) comprises at least one light scanner and/or is aligned in such a way that the width (4.1) of the pallet unit (4) can be detected in or opposite to a direction of movement (41) of the pallet unit (4).

21. The system according to any one of the preceding claims, **characterized in that** the width (4.1) of the pallet unit (4) can be determined redundantly, in particular, by a signal from the detection device (21) being able to be compared with a specification from the control unit (20).

22. The system according to any one of the preceding claims, **characterized in that** the one position detection of the drive (30) can be determined redundantly, in particular by a signal of the position sensor (33) of the drive (30) being able to be compared with a specification of the control unit (20).

23. The system according to any one of the preceding claims, **characterized in that** the palletizer (1) has a sliding table (5), onto which the material to be conveyed (2) can be placed, and a lifting device (6) for stacking the material to be conveyed (2) on a pallet (4.2) to form a pallet unit (4), wherein in particular the lifting device (6) is arranged below the sliding table (5) and the lifting device (6) has the conveyor unit (3) for transporting the pallet unit (4) away or the conveyor unit (3) is arranged on the lifting device (6) for transporting the pallet unit (4) away.

24. The system according to any one of the preceding claims, **characterized in that** the conveyor unit (3) has a roller conveyor and/or a conveyor belt.

25. The system according to any one of the preceding claims, **characterized in that** the security device (10) is controlled by a control unit (20) of the palletizer (1).

26. The system according to any one of the preceding claims, **characterized in that** the width (4.1) of the pallet unit (4) can be determined redundantly, in particular by a signal from a detection device (21) of the security device (10) being able to be compared with a specification from the control unit (20).

27. A method (100) for securing a conveyor unit (3) of a palletizer (1) by a security device (10) for the palletizer (1) with at least one security element (11) which can be arranged on the conveyer unit (3) of the palletizer (1), which is used to transport pallet units (4) away,
wherein the security against a user's unauthorized access to the conveyer unit (3) can be increased by the security element (11),
wherein the security element (11) can be brought into at least a first security state (I) and a second security state (II) in order to adapt it to a width (4.1) of the pallet unit (4),
wherein the method (100) comprises the following steps:
- transporting a pallet unit (4) away,
- detecting at least one width (4.1) of the pallet unit (4),
- transferring the security element (11) from a first security state (I) to a second security state (II) depending on the width (4.1) of the pallet unit (4).

28. The method (100) according to claim 27, **characterized in that** the transfer of the security element (11) from the first security state (I) to the second security state (II) takes place by a movement of the security element (11) and/or that the transfer of the security element (11) from the first security state (I) to the second security state (II) takes place by activating and/or deactivating optical elements (11.3) of the security element (11).

## Revendications

1. Système avec un palettiseur (1) pour la palettisation d'un produit à convoyer (2) et
un dispositif de sécurité (10), dans lequel le dispositif de sécurité (10) comprend au moins un élément de sécurité (11) qui est disposé sur une unité de convoyage (3) du palettiseur (1) qui permet le convoyage d'unités de palettes (4),
dans lequel la sécurité concernant un accès non autorisé d'un utilisateur à l'unité de convoyage (3) est augmentée par l'élément de sécurité (11),
**caractérisé en ce que**
l'élément de sécurité (11) peut être amené, pour une adaptation à une largeur (4.1) de l'unité de palette (4), au moins dans un premier état de sécurité (I) et une deuxième état de sécurité (II),
dans lequel un dispositif d'entraînement (30) est en liaison fonctionnelle indirecte ou directe avec l'élément de sécurité (11), de façon à ce que l'au moins un élément de sécurité (11) puisse être déplacé du premier état de sécurité (I) vers le deuxième état de sécurité (II) et/ou l'élément de sécurité (11) comprend des éléments optiques (11.3) qui peuvent être contrôlés en fonction de la largeur (4.1) de l'unité de palette (4).

2. Système selon la revendication 1,
**caractérisé en ce que**
l'élément de sécurité (11) peut être amené dans un troisième état de sécurité (III).

3. Système selon la revendication 1 ou 2,
**caractérisé en ce que**
l'élément de sécurité (11) a une action mécanique et/ou optique.

4. Système selon l'une des revendications précédentes,
**caractérisé en ce que**
dans au moins un état de sécurité (I, II, III), plus particulièrement dans au moins deux états de sécurité (I, II, III), une zone entre l'unité de convoyage (3) et l'unité de palette (4) est recouverte par l'élément de sécurité (11) lorsque l'unité de palette (4) passe par l'élément de sécurité (11).

5. Système selon l'une des revendications précédentes,
**caractérisé en ce que**
l'état de sécurité (I, II, III) respectif de l'élément de sécurité (11) est adapté à la largeur (4.1) de l'unité de palette (4) ou à une palette (4.2) de l'unité de palette (4) de façon à ce qu'un interstice (40) entre l'élément de sécurité (11) et l'unité de palette (4) et/ou entre l'unité de convoyage (3) et l'unité de palette (4) soit inférieur à 500 mm, de préférence inférieur ou égal à 230 mm, plus particulièrement de préférence inférieur ou égal à 200 mm lorsque l'unité de palette (4) passe par l'élément de sécurité (11).

6. Système selon l'une des revendications précédentes,
**caractérisé en ce que**
un dispositif de surveillance (12) supplémentaire est prévu, de façon à ce que l'accès non autorisé puisse être détecté et le palettiseur (1) arrêté, et plus particulièrement **en ce que** le dispositif de surveillance (12) puisse être désactivé lorsque l'unité de palette (4) passe par le dispositif de surveillance (12).

7. Système selon l'une des revendications précédentes,
**caractérisé en ce que**
au moins les premier et deuxième états de sécurité (I, II) et/ou le troisième état de sécurité (III) présentent respectivement des positions différentes de l'élément de sécurité (11).

8. Système selon l'une des revendications précédentes,
**caractérisé en ce que**
l'au moins un élément de sécurité (11) peut être amené pneumatiquement et/ou hydrauliquement du premier état de sécurité (I) vers le deuxième état de sécurité (II).

9. Système selon l'une des revendications précédentes,
**caractérisé en ce que**
une unité de commande (20) est prévue, grâce à laquelle l'état de sécurité (I, II, III) de l'élément de sécurité (11) peut être contrôlé.

10. Système selon l'une des revendications précédentes,
**caractérisé en ce que**
le dispositif d'entraînement (30) est en liaison de communication avec l'unité de commande (20) de façon à ce que le dispositif d'entraînement (30) puisse être contrôlé par l'unité de commande (20) et/ou à ce que la position du dispositif d'entraînement (30) puisse être déterminée par l'unité de commande (20).

11. Système selon l'une des revendications précédentes,
**caractérisé en ce que**
le dispositif d'entraînement (30) comprend un premier organe de réglage (31) et un deuxième organe de réglage (32) qui sont branchés plus particulièrement en série.

12. Système selon l'une des revendications précédentes,
**caractérisé en ce que**
l'état actif du premier et du deuxième organe de réglage (31, 32) peut être déterminé par au moins un, de préférence deux capteurs de position (33).

13. Système selon l'une des revendications précédentes,
**caractérisé en ce que**
chaque organe de réglage (31, 32) comprend deux capteurs de position (33) de façon à ce qu'une détection redondante du dispositif d'entraînement (30) soit possible.

14. Système selon l'une des revendications précédentes,
**caractérisé en ce que**
au moins deux capteurs de position (33) sont prévus sur l'élément de sécurité (11), de façon à ce qu'une détection de position, plus particulièrement redondante, de l'élément de sécurité (11) soit possible.

15. Système selon l'une des revendications précédentes,
**caractérisé en ce que**
l'élément de sécurité (11) comprend une première porte coulissante (11.1) et/ou une deuxième porte coulissante (11.2).

16. Système selon l'une des revendications précédentes,
**caractérisé en ce que**
les portes coulissantes (11.1, 11.2) peuvent être contrôlées et/ou sont couplées entre elles de façon à ce que les portes coulissantes (11.1, 11.2) se déplacent de manière synchrone ou de manière globalement synchrone.

17. Système selon l'une des revendications précédentes,
**caractérisé en ce que**
l'élément de sécurité (11) peut être rallongé, plus particulièrement de manière télescopique.

18. Système selon l'une des revendications précédentes,
**caractérisé en ce que**
les éléments optiques (11.3) comprennent des capteurs optiques et/ou des barrières photo-électriques et/ou des éléments laser.

19. Système selon l'une des revendications précédentes,
**caractérisé en ce que**
l'élément de sécurité (11) définit, au moins dans le premier état de sécurité (I) et dans le deuxième état de sécurité (II), un rideau lumineux qui s'étend, plus particulièrement, de préférence perpendiculairement à une direction de déplacement (41) de l'unité de palette (4).

20. Système selon l'une des revendications précédentes,
**caractérisé en ce que**
un dispositif de détection (21), plus particulièrement optique, est prévu, qui permet de mesurer la largeur (4.1) de l'unité de palette (4), plus particulièrement le dispositif de détection (21) comprend au moins un capteur optique et/ou est orienté de façon à ce que largeur (4.1) de l'unité de palette (4) puisse être mesurée dans ou à l'encontre d'une direction de déplacement (41) de l'unité de palette (4).

21. Système selon l'une des revendications précédentes,
**caractérisé en ce que**
la largeur (4.1) de l'unité de palette (4) peut être déterminée de manière redondante, plus particulièrement dans lequel un signal du dispositif de détection (21) peut être comparé avec une instruction de l'unité de commande (20).

22. Système selon l'une des revendications précédentes,
**caractérisé en ce que**
la détection de position du dispositif d'entraînement (30) peut être déterminée de manière redondante, plus particulièrement dans lequel un signal du capteur de position (33) du dispositif d'entraînement (30) peut être comparée avec une instruction de l'unité de commande (20).

23. Système selon l'une des revendications précédentes,
**caractérisé en ce que**
le palettiseur (1) comprend une table coulissante (5) sur laquelle le produit à convoyer (2) peut être posé et un dispositif de levage (6) pour l'empilement du produit à convoyer (2) sur une palette (4.2) afin d'obtenir une unité de palette (4), dans lequel, plus particulièrement, le dispositif de levage (6) est disposé en dessous de la table coulissante (5) et le dispositif de levage (6) comprend l'unité de convoyage (3) pour le transport de l'unité de palette (4) ou l'unité de convoyage (3) est disposée sur le dispositif de levage (6) pour le transport de l'unité de palette (4).

24. Système selon l'une des revendications précédentes,
**caractérisé en ce que**
l'unité de convoyage (3) comprend un convoyeur à rouleaux et/ou un convoyeur à bande.

25. Système selon l'une des revendications précédentes,
**caractérisé en ce que**
le dispositif de sécurité (10) est contrôlé par une unité de commande (20) du palettiseur (1).

26. Système selon l'une des revendications précédentes,
**caractérisé en ce que**
la largeur (4.1) de l'unité de palette (4) peut être déterminée de manière redondante, plus particulièrement dans lequel un signal du dispositif de détection (21) du dispositif de sécurité (10) peut être comparé avec une instruction de l'unité de commande (20).

27. Procédé (100) de sécurisation d'une unité de convoyage (3) d'un palettiseur (1) grâce à un dispositif de sécurité (10) pour le palettiseur (1) avec au moins un élément de sécurité (11) qui peut être disposé sur l'unité de convoyage (3) du palettiseur (1), qui permet le transport d'unités de palettes (4),
dans lequel la sécurité concernant un accès non autorisé d'un utilisateur à l'unité de convoyage (3) peut être augmentée par l'élément de sécurité (11),
dans lequel l'élément de sécurité (11) peut être amené, pour l'adaptation à une largeur (4.1) de l'unité de palette (4), au moins dans un premier état de sécurité (I) et un deuxième état de sécurité (II),
dans lequel le procédé (100) comprend les étapes suivantes :
- transport d'une unité de palette (4),
- détection d'au moins une largeur (4.1) de l'unité de palette (4),
- passage de l'élément de sécurité (11) d'un premier état de sécurité (I) à un deuxième état de sécurité (II) en fonction de la largeur (4.1) de l'unité de palette (4).

28. Procédé (100) selon la revendication 27,
**caractérisé en ce que**
le passage de l'élément de sécurité (11) du premier état de sécurité (I) au deuxième état de sécurité (II) a lieu grâce à un déplacement de l'élément de sécurité (11) et/ou le passage de l'élément de sécurité (11) du premier état de sécurité (I) au deuxième état de sécurité (II) a lieu grâce à une activation et/ou une désactivation d'éléments optiques (11.3) de l'élément de sécurité (11).
